# EUROPEAN PATENT APPLICATION

(11) **EP 4 472 313 A1**
(43) Date of publication of application: **04.12.2024**
(21) Application number: 22922947.1
(22) Date of filing: 30.01.2022
(51) Int. Cl.: H04W 72/04

(54) **COMMUNICATION METHOD AND APPARATUS, TERMINAL DEVICE, CHIP, MEDIUM, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); LIN, Huei-Ming, Taipei, Taiwan 111 (TW); MA, Teng, Dongguan, Guangdong 523860 (CN)
(74) Representative: RGTH
(86) International application number: PCT/CN2022/075232
(87) International publication number: WO 2023/142122

(57) **Abstract**

Embodiments of this application provide a communication method, an apparatus, a terminal device, a chip, a medium, a product, and a program, where the method includes: determining, by a first terminal, a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and sending, by the first terminal, the first sidelink information to a second terminal based on the first priority.

## Description

Embodiments of this application relate to the technical field of mobile communication, and in particular, to a communication method, an apparatus, a terminal device, a chip, a medium, a product, and a program.

### BACKGROUND

In a communication transmission process, it is often involved that a terminal device not only may communicate with a network device by using an uplink (Uplink, UL) but also may communicate with another terminal device by using a sidelink (Sidelink, SL). However, when the terminal device determines that transmission of uplink information overlaps that of sidelink information in time, that is, determines that the transmission of the uplink information conflicts with that of the sidelink information, because a transmit power of the terminal device is limited, the terminal device needs to consider performing power allocation between uplink communication and sidelink communication. In some cases, when the terminal device cannot support the uplink communication and the sidelink communication simultaneously, the terminal device needs to abandon one of communications links and perform communication on only one link. Therefore, the terminal device needs to determine how to perform link communication.

In addition, currently, a case in which transmission of long-term evolution (Long Term Evolution, LTE) SL data conflicts with transmission of new radio (New Radio, NR) SL data is also defined, that is, the terminal device may select the transmission of the LTE SL data or the transmission of the NR SL data according to a result of comparing a priority of the transmission of the LTE SL data with a priority of the transmission of the NR SL data.

With continuous development of technologies, the current solution to a link conflict may not be applicable to more complex scenarios.

### SUMMARY

Embodiments of this application provide a communication method, an apparatus, a terminal device, a chip, a medium, a product, and a program.

According to a first aspect, an embodiment of this application provides a communication method, where the method includes:
determining, by a first terminal, a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and
sending, by the first terminal, the first sidelink information to a second terminal based on the first priority; where
the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

According to a second aspect, an embodiment of this application provides a communication method, where the method includes:
determining, by a second terminal, a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and
receiving, by the second terminal based on the first priority, the first sidelink information sent by the first terminal; where
the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

According to a third aspect, an embodiment of this application provides a communication method, where the method includes:
determining, by a first terminal, a third priority corresponding to fifth sidelink information; where the fifth sidelink information includes at least one of the following: a measurement result or second reference signal resource indication information; and
receiving, by the first terminal based on the third priority, the fifth sidelink information sent by a second terminal.

According to a fourth aspect, an embodiment of this application provides a communication method, where the method includes:
determining, by a second terminal, a third priority corresponding to fifth sidelink information; where the fifth sidelink information includes at least one of the following: a measurement result or second reference signal resource indication information; and
sending, by the second terminal, the fifth sidelink information to a first terminal based on the third priority.

According to a fifth aspect, an embodiment of this application provides a communications apparatus, where the communications apparatus includes:
a determining unit, configured to determine a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and
a transceiver unit, configured to send the first sidelink information to a second terminal based on the first priority; where
the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

According to a sixth aspect, an embodiment of this application provides a communications apparatus, where the communications apparatus includes:
a determining unit, configured to determine a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and
a transceiver unit, configured to receive, based on the first priority, the first sidelink information sent by the first terminal; where
the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

According to a seventh aspect, an embodiment of this application provides a communications apparatus, where the communications apparatus includes:
a determining unit, configured to determine a third priority corresponding to fifth sidelink information; where the fifth sidelink information includes at least one of the following: a measurement result or second reference signal resource indication information; and
a transceiver unit, configured to receive, based on the third priority, the fifth sidelink information sent by a second terminal.

According to an eighth aspect, an embodiment of this application provides a communications apparatus, where the communications apparatus includes:
a determining unit, configured to determine a third priority corresponding to fifth sidelink information; where the fifth sidelink information includes at least one of the following: a measurement result or second reference signal resource indication information; and
a transceiver unit, configured to send the fifth sidelink information to a first terminal based on the third priority.

According to a ninth aspect, an embodiment of this application provides a terminal device, including a processor and a memory, where the memory is configured to store a computer program, and the processor is configured to invoke and run the computer program stored in the memory to execute the method according to any one of the foregoing aspects.

According to a tenth aspect, an embodiment of this application provides a chip, including a processor, configured to invoke a computer program from a memory and run the computer program, so that a device on which the chip is installed executes the method according to any one of the foregoing aspects.

According to an eleventh aspect, an embodiment of this application provides a computer storage medium, configured to store a computer program, where the computer program causes a terminal device to execute the method according to any one of the foregoing aspects.

According to a twelfth aspect, an embodiment of this application provides a computer program product, including computer program instructions, where the computer program instructions cause a terminal device to execute the method according to any one of the foregoing aspects.

According to a thirteenth aspect, an embodiment of this application provides a computer program, where the computer program causes a terminal device to execute the method according to any one of the foregoing aspects.

In embodiments of this application, a first terminal determines a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and the first terminal sends the first sidelink information to a second terminal based on the first priority. In this way, the first terminal can determine the first priority corresponding to the first sidelink information. Therefore, in a case in which transmission of the first sidelink information conflicts with that of other information, the first terminal can resolve the transmission conflict by using the first priority corresponding to the first sidelink information. This improves reliability of information transmission.

### BRIEF DESCRIPTION OF DRAWINGS

The accompanying drawings described herein are used to provide a further understanding of this application, and constitute a part of this application. Schematic embodiments of this application and descriptions thereof are used to explain this application, and do not constitute an improper limitation on this application. In the accompanying drawings:
FIG. 1 is a schematic diagram of sidelink communication within network coverage according to an embodiment of this application.
FIG. 2 is a schematic diagram of sidelink communication partially within network coverage according to an embodiment of this application.
FIG. 3 is a schematic diagram of sidelink communication out of network coverage according to an embodiment of this application.
FIG. 4 is a schematic diagram of sidelink communication with a central control node according to an embodiment of this application.
FIG. 5 is a schematic diagram of a unicast transmission manner according to an embodiment of this application.
FIG. 6 is a schematic diagram of a multicast transmission manner according to an embodiment of this application.
FIG. 7 is a schematic diagram of a broadcast transmission manner according to an embodiment of this application.
FIG. 8a is a schematic diagram of a frame structure of an NR-V2X system according to an embodiment of this application.
FIG. 8b is a schematic diagram of another frame structure of an NR-V2X system according to an embodiment of this application.
FIG. 9 is a schematic diagram of a time-frequency position of an SL CSI-RS according to an embodiment of this application.
FIG. 10a is a schematic diagram of a system that does not use beamforming according to an embodiment of this application.
FIG. 10b is a schematic diagram of a system that uses beamforming according to an embodiment of this application.
FIG. 11 is a schematic diagram of a method for configuring a TCI state of a PDSCH according to an embodiment of this application.
FIG. 12a is a schematic flowchart of a communication method according to an embodiment of this application.
FIG. 12b is a schematic flowchart of another communication method according to an embodiment of this application.
FIG. 13 is a schematic diagram of determining an optimal transmit beam according to an embodiment of this application.
FIG. 14 is a schematic diagram of a manner of determining a receive beam according to an embodiment of this application.
FIG. 15 is a schematic diagram of transmission of second sidelink information after TCI state indication information is received according to an embodiment of this application.
FIG. 16 is a schematic diagram of a position of first indication information according to an embodiment of this application.
FIG. 17a is a schematic flowchart of still another communication method according to an embodiment of this application.
FIG. 17b is a schematic flowchart of yet another communication method according to an embodiment of this application.
FIG. 18 is a schematic diagram of a structure of a communications apparatus according to an embodiment of this application.
FIG. 19 is a schematic diagram of a structure of another communications apparatus according to an embodiment of this application.
FIG. 20 is a schematic diagram of a structure of still another communications apparatus according to an embodiment of this application.
FIG. 21 is a schematic diagram of a structure of yet another communications apparatus according to an embodiment of this application.
FIG. 22 is a schematic structural diagram of a terminal device according to an embodiment of this application.
FIG. 23 is a schematic structural diagram of a chip according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by persons of ordinary skill in the art based on embodiments of this application without creative efforts fall within the protection scope of this application.

The technical solutions described in embodiments of this application may be randomly combined without conflicts. In the descriptions of this application, "a plurality of" means two or more, unless otherwise specifically limited.

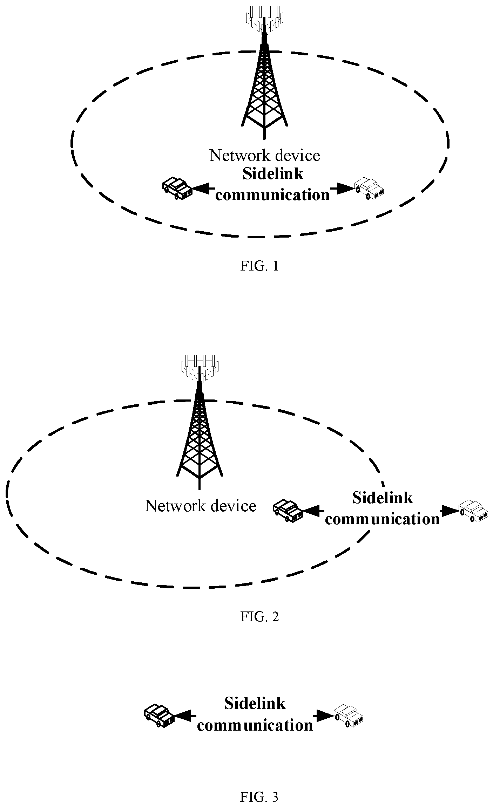

Sidelink communication may be divided, depending on a network coverage status of a terminal device that performs communication, into sidelink communication within network coverage, sidelink communication partially within network coverage, sidelink communication out of network coverage, and sidelink communication with a central control node, as shown in FIG. 1 to FIG. 4, respectively.

FIG. 1 is a schematic diagram of sidelink communication within network coverage according to an embodiment of this application. As shown in FIG. 1, in sidelink communication within network coverage, all terminal devices that perform sidelink communication are in a coverage range of a same network device. Therefore, all the foregoing terminal devices may perform sidelink communication by receiving configuration signalling of the network device and based on a same sidelink configuration.

FIG. 2 is a schematic diagram of sidelink communication partially within network coverage according to an embodiment of this application. As shown in FIG. 2, in a case of sidelink communication partially within network coverage, some terminal devices that perform sidelink communication are located in a coverage range of a network device. The terminal devices may receive configuration signalling of the network device, and perform sidelink communication according to a configuration of the network device. However, a terminal device located outside the network coverage range cannot receive the configuration signalling of the network device. In this case, the terminal device outside the network coverage range determines a sidelink configuration according to pre-configuration (pre-configuration) information and information carried in a physical sidelink broadcast channel (Physical Sidelink Broadcast CHannel, PSBCH) transmitted by a terminal device located in the network coverage range, and performs sidelink communication.

FIG. 3 is a schematic diagram of sidelink communication out of network coverage according to an embodiment of this application. As shown in FIG. 3, for sidelink communication out of network coverage, all terminal devices that perform sidelink communication are located outside a network coverage range, and all the terminal devices may determine a sidelink configuration according to pre-configuration information and perform sidelink communication.

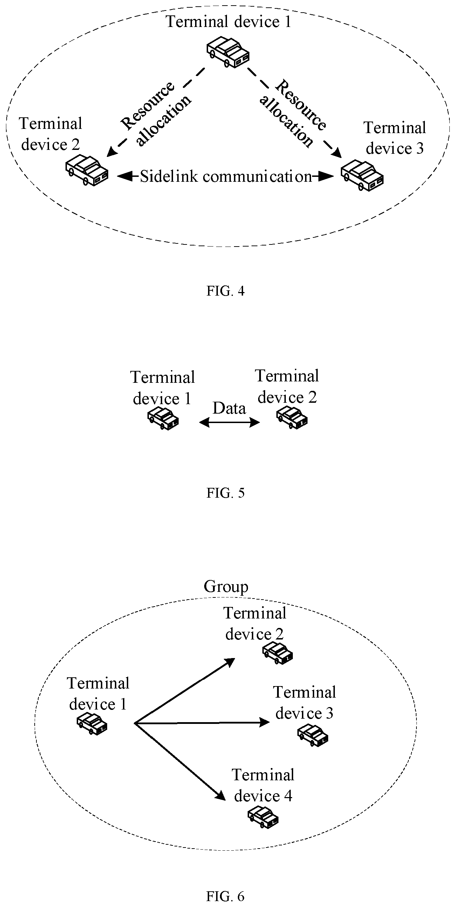

FIG. 4 is a schematic diagram of sidelink communication with a central control node according to an embodiment of this application. As shown in FIG. 4, for sidelink communication with a central control node, a plurality of terminal devices (for example, terminal devices 1 to 3) form a communications group. The communications group has a central control node, which may also form a cluster header (Cluster Header, CH) terminal device. The central control node has at least one of the following functions: being responsible for functions such as establishing a communications group, joining and/or leaving of a group member, performing resource coordination, allocating a sidelink transmission resource to another terminal device, receiving sidelink feedback information of another terminal device, or performing resource coordination with another communications group.

Device-to-device communication is a sidelink transmission technology based on D2D. Different from a conventional cellular system in which communication data is received or sent by a network device, device-to-device communication has higher spectrum efficiency and a lower transmission delay. A vehicle-to-everything system uses device-to-device communication, which is a manner of direct communication. In the 3rd generation partnership project (3rd Generation Partnership Project, 3GPP), two transmission modes are defined: a first mode and a second mode.

First mode: A transmission resource of a terminal device is allocated by a network device, and the terminal device may send data on a sidelink according to the resource allocated by the network device. The network device may allocate, to the terminal device, a resource for a single time of transmission, or may allocate, to the terminal device, a resource for semi-static transmission. As shown in FIG. 1, a terminal device is located in a coverage range of a network, and the network allocates, to the terminal device, a transmission resource used for sidelink transmission.

Second mode: A terminal device selects a resource from a resource pool to perform data transmission. As shown in FIG. 3, a terminal device is located outside a coverage range of a cell, and the terminal device may independently select a transmission resource from a pre-configured resource pool to perform sidelink transmission. Alternatively, in FIG. 1, a terminal device may independently select a transmission resource from a resource pool configured by a network to perform sidelink transmission.

In NR-V2X, autonomous driving is supported. Therefore, higher requirements are imposed on data interaction between vehicles, such as higher throughput, a lower delay, higher reliability, a larger coverage range, and more flexible resource allocation.

In NR-V2X, transmission manners such as unicast, multicast, and broadcast are supported. For unicast transmission, a receive end device has one terminal device.

FIG. 5 is a schematic diagram of a unicast transmission manner according to an embodiment of this application. As shown in FIG. 5, unicast transmission may be performed between a terminal device 1 and a terminal device 2.

FIG. 6 is a schematic diagram of a multicast transmission manner according to an embodiment of this application. As shown in FIG. 6, for multicast transmission, a receive end device may be all terminal devices in a communications group, or may be all terminal devices in a specific transmission distance. For example, a terminal device 1, a terminal device 2, a terminal device 3, and a terminal device 4 form a communications group, where the terminal device 1 sends data, and all the other terminal devices in the group may be receive end devices.

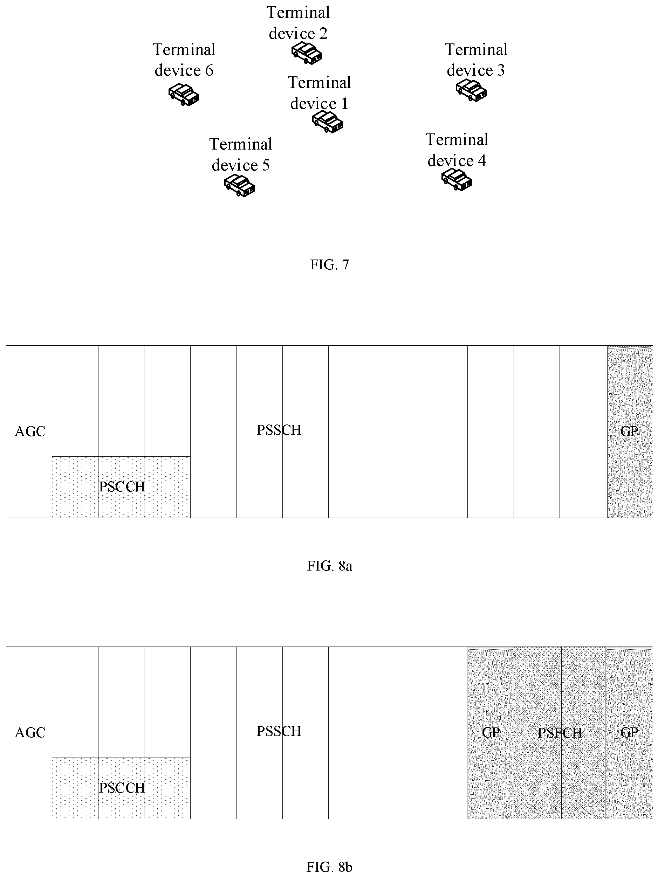

FIG. 7 is a schematic diagram of a broadcast transmission manner according to an embodiment of this application. As shown in FIG. 7, for the broadcast transmission manner, a receive end device may be any terminal device around a transmit end device. For example, a terminal device 1 is a transmit end device, and the other terminal devices (that is, a terminal device 2 to a terminal device 6) around the terminal device 1 are all receive end devices.

FIG. 8a is a schematic diagram of a frame structure of an NR-V2X system according to an embodiment of this application. As shown in FIG. 8a, a slot of the frame structure of the NR-V2X system in the embodiment shown in FIG. 8a includes no physical sidelink feedback channel (Physical Sidelink Feedback Channel, PSFCH).

FIG. 8b is a schematic diagram of another frame structure of an NR-V2X system according to an embodiment of this application. As shown in FIG. 8b, a slot of the frame structure of the NR-V2X system in the embodiment shown in FIG. 8b includes a PSFCH.

In the embodiments shown in FIG. 8a and FIG. 8b, a physical sidelink control channel (Physical Sidelink Control Channel, PSCCH) in NR-V2X starts from the second sidelink symbol of a slot in time domain and occupies two or three orthogonal frequency division multiplexing (Orthogonal Frequency Division Multiplexing, OFDM) symbols, and may occupy { 10, 12, 15, 20, 25} physical resource blocks (Physical Resource Block, PRB) in frequency domain. To reduce complexity of blind detection performed by a terminal device on the PSCCH, one quantity of PSCCH symbols and one quantity of PRBs may be allowed to be configured in one resource pool.

In addition, because a sub-channel is a minimum granularity for allocation of a physical sidelink shared channel (Physical Sidelink Shared Channel, PSSCH) resource in NR-V2X, a quantity of PRBs occupied by a PSCCH is less than or equal to a quantity of PRBs included in one sub-channel in a resource pool. This avoids an additional limitation on selection or allocation of the PSSCH resource. A PSSCH also starts from the second sidelink symbol of the slot in time domain. The last time domain symbol in the slot is a guard period (Guard Period, GP) symbol, and the remaining symbols are mapped to the PSSCH. The first sidelink symbol in the slot is a repetition of the second sidelink symbol. Usually, a receive end device uses the first sidelink symbol as an automatic gain control (Automatic Gain Control, AGC) symbol, and usually data on the symbol is not used for data demodulation. The PSSCH may occupy K sub-channels in frequency domain, and each sub-channel includes M consecutive PRBs, where both K and M are integers greater than or equal to 1.

In FIG. 8b, when a slot includes a PSFCH, the penultimate symbol and the antepenultimate symbol in the slot are used for transmission of the PSFCH, and a time domain symbol before the PSFCH is used as a GP symbol.

The following describes a sidelink channel state information reference signal (Channel State Information-Reference Signal, CSI-RS). To better support unicast communication, an SL CSI-RS is supported in NR-V2X. In one case, an SL CSI-RS is sent when the following three conditions are met:
(1) A terminal device sends a corresponding PSSCH, that is, the terminal device cannot send only the SL CSI-RS;
(2) Higher layer signalling activates reporting of SL CSI; and
(3) In a case in which the higher layer signalling activates the reporting of the SL CSI, a corresponding bit in second stage sidelink control information (Sidelink Control Information, SCI) sent by the terminal device triggers the reporting of the sidelink CSI.

A maximum quantity of ports supported by the SL CSI-RS may be 2. When the SL CSI-RS is sent on two ports, the SL CSI-RS on each port occupies two adjacent REs of a same OFDM symbol, and the SL CSI-RSs on the two ports occupy the same REs. Resources of the two ports are distinguished in a manner of code division. In one PRB, there is one SL CSI-RS on each port, that is, a density is 1. Therefore, in one PRB, the SL CSI-RS appears on a maximum of one OFDM symbol. A specific position of the OFDM symbol is determined by a transmit terminal device. To avoid an impact on resource mapping of a PSCCH and second stage SCI, the SL CSI-RS cannot be located in a same OFDM symbol as the PSCCH and/or the second stage SCI. An OFDM symbol in which a demodulation reference signal (DeModulation Reference Signal, DMRS) of a PSSCH is located has relatively high channel estimation accuracy, and SL CSI-RSs of two ports occupy two consecutive REs in frequency domain. Therefore, the SL CSI-RSs cannot be sent on a same OFDM symbol as the DMRS of the PSSCH. A position of an OFDM symbol in which an SL CSI-RS is located is indicated by an sl-CSI-RS-FirstSymbol parameter in PC5 radio resource control (Radio Resource Control, RRC).

A position of the first RE occupied by the SL CSI-RS in one PRB is indicated by an sl-CSI-RS-FreqAllocation parameter in PC5 RRC. If the SL CSI-RS is one port, the parameter is a bitmap with a length of 12, which corresponds to 12 REs in one PRB. If the SL CSI-RS is two ports, the parameter is a bitmap with a length of 6. In this case, the SL CSI-RS occupies two REs, that is, 21(1) and 2f (1) +1, where *f*(1) indicates an index of a bit with a value of 1 in the foregoing bitmap. A frequency domain position of the SL CSI-RS is also determined by the transmit terminal device. However, the determined frequency domain position of the SL CSI-RS cannot conflict with a phase tracking reference signal (Phase Tracking-Reference Signals, PT-RS).

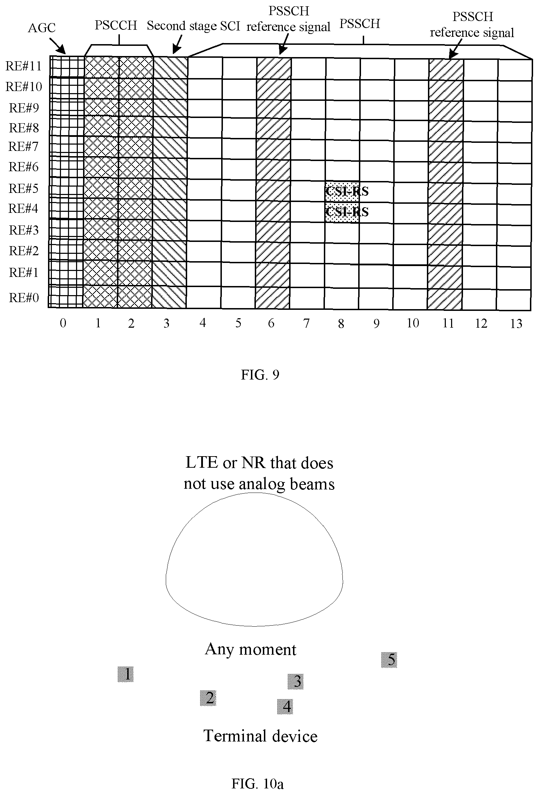

FIG. 9 is a schematic diagram of a time-frequency position of an SL CSI-RS according to an embodiment of this application. In FIG. 9, a quantity of ports for the SL CSI-RS is 2, sl-CSI-RS-FirstSymbol is 8, that is, sl-CSI-RS-FirstSymbol indicates that a time domain position of the SL CSI-RS is the eighth symbol, and sl-CSI-RS-FreqAllocation is [*b*₅,*b*₄,*b*₃,*b*₂,*b*₁,*b*₀] =[0,0,0,1,0,0], that is, sl-CSI-RS-FreqAllocation indicates that a frequency domain position of the SL CSI-RS is the fourth RE and the fifth RE (because the quantity of ports for the SL CSI-RS is 2, *b*₂ with a corresponding value of 1 is mapped to the fourth RE and the fifth RE). In addition, for descriptions of AGC, a PSCCH, second stage SCI, a PSCCH reference signal, and a time domain position of a PSSCH, reference is made to descriptions in FIG. 9.

A design objective of an NR system or a 5th generation mobile communication technology (5th Generation Mobile Communication Technology, 5G) system includes high-bandwidth communication with a high frequency band (for example, a frequency band above 6 GHz). When a working frequency becomes higher, path loss in a transmission process increases, which affects a coverage capability of a high-frequency system. To effectively ensure coverage of an NR system with a high frequency band, an effective technical solution is based on a massive antenna array or massive (Massive) multiple-input and multiple-output (Multi Input Multi Output, MIMO), to form a shaped beam with a larger gain, overcome propagation loss, and ensure system coverage.

Because a millimeter-wave antenna array has a shorter wavelength, a smaller antenna array spacing, and a smaller aperture, more physical antenna arrays may be integrated into a two-dimensional antenna array of a limited size. In addition, because a size of the millimeter-wave antenna array is limited, a digital beamforming manner cannot be used due to factors such as hardware complexity, costs, and power consumption. Instead, usually an analog beamforming manner is used, which may reduce implementation complexity of a device while enhancing network coverage.

In a communications system in a related technology, a cell (sector) uses a relatively wide beam (beam) to cover the entire cell. Therefore, at each moment, a terminal device in a coverage range of the cell has an opportunity to obtain a transmission resource allocated by the system.

A multi-beam (Multi-beam) system of NR or 5G covers an entire cell by using different beams, that is, each beam covers a relatively small range, and an effect of covering the entire cell is implemented by using sweeping (sweeping) in time.

FIG. 10a is a schematic diagram of a system that does not use beamforming according to an embodiment of this application. The system in FIG. 10a may be an LTE system and/or an NR system. A network side of the LTE system or that of the NR system or both use a wide beam to cover an entire cell, and terminal devices 1 to 5 may receive a network signal at any moment.

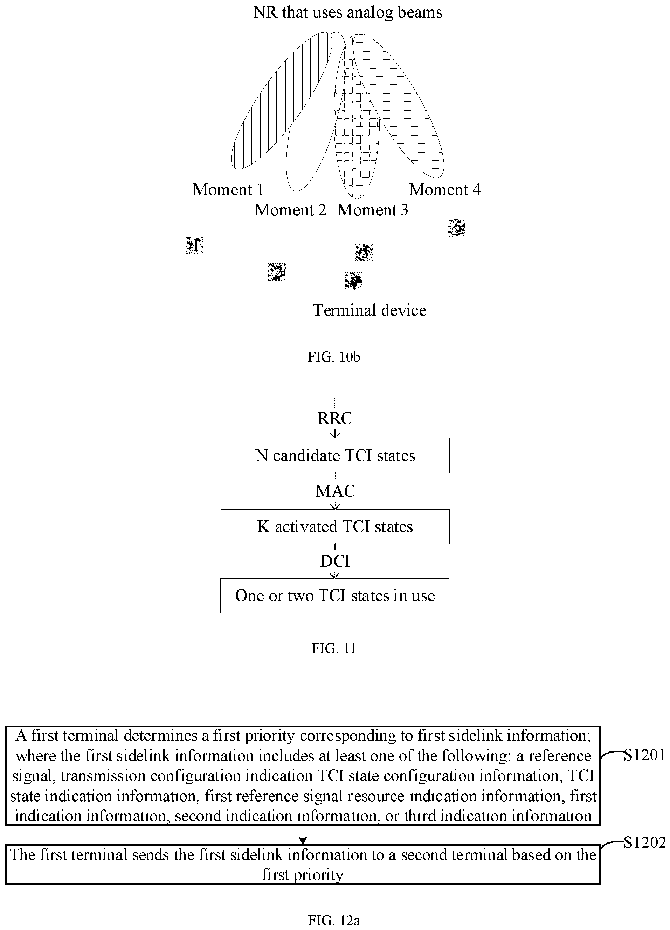

FIG. 10b is a schematic diagram of a system that uses beamforming according to an embodiment of this application. The system in FIG. 10a may be an NR system. A network side of the NR system uses relatively narrow beams (for example, beams 1 to 4 in the figure), and different beams are used at different moments to cover different areas in a cell. For example, at a moment 1, the NR network side covers, by using the beam 1, an area in which a terminal device 1 is located. At a moment 2, the NR network side covers, by using the beam 2, an area in which a terminal device 2 is located. At a moment 3, the NR network side covers, by using the beam 3, an area in which a terminal device 3 and a terminal device 4 are located. At a moment 4, the NR network side covers, by using the beam 4, an area in which a terminal device 5 is located.

In FIG. 10b, a network device uses relatively narrow beams, transmit energy may be more concentrated, and therefore may cover a further distance. In addition, because the beams are relatively narrow, each beam can cover only some areas in the cell. Therefore, analog beamforming is "time for space".

Optionally, analog beamforming not only may be used for a network-side device but also may be used for a terminal device. In addition, analog beamforming not only may be used for signal transmission (referred to as a transmit beam) but also may be used for signal receiving (referred to as a receive beam).

Different beams may be identified by different signals that are carried. For example, different synchronization signal blocks (Synchronization Signal Block, SS Block) are transmitted on some different beams, and a terminal device may distinguish the different beams by using the different SS blocks. For another example, different CSI-RS signals are transmitted on some different beams, and a terminal device identifies the different beams by using the CSI-RS signals or CSI-RS resources.

In a multi-beam system, a PDCCH and a PDSCH may be transmitted by using different downlink transmit beams.

Optionally, for a system with a frequency band below 6GHZ, usually there is no analog beam on a terminal device side. Therefore, omni-directional antennas (or near omni-directional antennas) are used to receive signals sent by different downlink transmit beams of a base station.

Optionally, for a millimeter-wave system, there may be an analog beam on a terminal device side, and a corresponding downlink receive beam needs to be used to receive a signal sent by a corresponding downlink transmit beam. In this case, corresponding beam indication information (beam indication) is required to assist the terminal device in determining transmit beam related information on a network side, or assist the terminal device in determining corresponding receive beam related information.

In an NR protocol, beam indication information does not directly indicate a beam, but indicates by using quasi co-located (Quasi CoLocated, QCL) (for example, a 'QCL-TypeD'type) between signals. On the terminal device side, determining of receiving of a corresponding channel or a corresponding signal is also based on the QCL hypothesis.

When performing signal receiving, a terminal device may improve a receiving algorithm by using a feature of a transmission environment corresponding to data transmission, to improve receiving performance. For example, a statistics collection feature of a channel may be used to optimize a design and a parameter of a channel estimator. In an NR system, the features corresponding to data transmission are represented by QCL states (QCL-Info).

If downlink transmission comes from different transmission-reception points (Transmission Reception Point, TRP) and/or antenna panels (panel) and/or beams, a feature of a transmission environment corresponding to information transmission may also change. Therefore, in the NR system, when transmitting a downlink control channel or a data channel, a network side indicates corresponding QCL state information to a terminal device by using a transmission configuration indication (Transmission Configuration Indication, TCI) state.

A TCI state (TCI-state) may include at least one of the following configurations: a TCI state identifier (ID), used to identify a TCI state; QCL information 1; or QCL information 2 (optional).

One piece of QCL information includes at least one of the following information:
QCL type configuration, which may be one of QCL-TypeA, QCL-TypeB, QCL-TypeC, or QCL-TypeD; or
QCL reference signal configurations, which include an ID of a cell in which a reference signal is located, an ID of a bandwidth part (BandWidth Part, BWP), and an identifier of the reference signal (which may be, for example, an ID of a CSI-RS resource or an index of an SSB).

Optionally, if both the QCL information 1 and the QCL information 2 are configured, a QCL type of at least one piece of QCL information is one of TypeA, TypeB, or TypeD, and a QCL type of the remaining QCL information (if configured) is TypeD.

Different QCL type configurations are defined as follows:
'QCL-TypeA': {Doppler shift (Doppler shift), Doppler spread (Doppler spread), average delay (average delay), delay spread (delay spread)};
'QCL-TypeB': {Doppler shift, Doppler spread};
'QCL-TypeC': {Doppler shift, average delay}; and
'QCL-TypeD': {Spatial Rx parameter (Spatial Rx parameter)}.

In the NR system, the network side may indicate a corresponding TCI state for a downlink signal or a downlink channel.

If the network side configures, by using the TCI state, a QCL reference signal of a target downlink channel or a target downlink signal as a reference SSB or a reference CSI-RS resource, and a QCL type is set to typeA, typeB, or typeC, the terminal device may assume that a large-scale parameter of the target downlink signal is identical to that of the reference SSB or the reference CSI-RS resource, and the large-scale parameter is determined by using a QCL type configuration.

If the network side configures, by using the TCI state, a QCL reference signal of a target downlink channel or a downlink signal as a reference SSB or a reference CSI-RS resource, and a QCL type is set to TypeD, the terminal device may receive the target downlink signal by using a same receive beam (that is, a same Spatial Rx parameter) for receiving the reference SSB or the reference CSI-RS resource. Usually, the target downlink channel (or the downlink signal) and the reference SSB or the reference CSI-RS resource of the target downlink channel (or the downlink signal) are sent on the network side by a same TRP or a same panel or a same beam. If transmission TRPs or transmission panels or transmit beams of two downlink signals or two downlink channels are different, usually different TCI states are configured.

For a downlink control channel, a TCI state of a corresponding control resource set (Control Resource Set, CORESET) may be indicated by using RRC signalling, or RRC signalling plus medium access control (Media Access Control, MAC) signalling, or MAC signalling.

For a downlink data channel, an available TCI state set is indicated by using RRC signalling, and some TCI states in the TCI state set are activated by using MAC layer signalling. Finally, one or two TCI states are indicated from the activated TCI states by using a TCI state indication field in downlink control information (Downlink Control Information, DCI), and are used for a PDSCH scheduled by the DCI. A case in which there are two TCI states is mainly for a scenario of a plurality of TRPs.

FIG. 11 is a schematic diagram of a method for configuring a TCI state of a PDSCH according to an embodiment of this application. As shown in FIG. 11, N candidate TCI states are indicated by using RRC signalling, the TCI states are activated by using MAC layer signalling, to obtain K activated TCI states, and one or two TCI states in use are indicated by using DCI signalling. N and K are integers greater than or equal to 1.

When a terminal device performs both sidelink sending and uplink sending on one carrier or two carriers, but the terminal device does not support both the sidelink sending and the uplink sending, the terminal device needs to select sending of the foregoing data or sidelink data according to a priority of uplink data and a priority of the sidelink data. For example, the terminal device selects the one with a higher priority in the uplink data and the sidelink data.

If the terminal device needs to send both LTE SL data and NR SL data, the LTE SL data overlaps the NR SL data in time domain, and the terminal device may learn of a priority of the LTE SL data and that of the NR SL data in advance, the terminal device selects sending of data with a higher priority according to a result of comparing the priority of the LTE SL data with that of the NR SL data.

If the terminal device needs to send or receive LTE SL data and also receive NR SL data, the LTE SL data overlaps the NR SL data in time domain, and the terminal device may learn of a priority of the LTE SL data and that of the NR SL data in advance, the terminal device selects sending or receiving of the LTE SL data or receiving of the NR SL data according to a result of comparing the priority of the LTE SL data with that of the NR SL data.

However, in an SL system in a related technology, how to determine a priority of a channel such as a PSCCH, a PSSCH, a sidelink SSB (S-SSB), or a PSFCH is specified. In addition, a priority of CSI information when a receive end device feeds back the CSI to a transmit end device is also specified. However, when the sidelink system works on a millimeter-wave frequency band, an optimal transmit beam of the transmit end needs to be determined. In a process of determining the transmit beam, the transmit end device needs to send a sidelink CSI-RS by using different beams. The receive end device measures the received CSI-RSs, and feeds back or reports a CSI-RS resource and/or a measurement result to the transmit end device according to a measurement result. The transmit end device configures a TCI-state set for the receive end device according to information about the CSI-RS resource fed back by the receive end device, and indicates a TCI-state in a subsequent transmission process. The receive end device may determine corresponding receive beam information and/or transmit beam information of the transmit end device according to TCI-state indication information.

It can be learned from the foregoing descriptions that, in the foregoing process of determining the transmit beam, sending of a new signal or indication information is introduced, such as reporting or feedback of a CSI-RS, a CSI-RS resource, a measurement result, and TCI-state indication information that are used for beam selection. How to determine priorities of the signals or indication information is a problem that needs to be resolved.

It should be noted that, in a case in which no descriptions are provided for a beam in this embodiment of this application, the beam may refer to a transmit beam and/or a receive beam. The beam may be formed by using beamforming (beamforming) or spatial domain filtering. The spatial domain filtering may be implemented by using a spatial domain filter (spatial domain filter). Beamforming and spatial domain filtering may be understood identically, or one beam corresponds to one spatial domain filter. Transmit beam shaping and spatial domain transmission filtering may be understood identically, or a transmit beam corresponds to a spatial domain transmission filter (spatial domain transmission filter). Receive beam shaping and spatial domain reception filtering may be understood identically, or a receive beam corresponds to a spatial domain reception filter (spatial domain reception filter). In some embodiments, a spatial domain transmission filter may be referred to as a spatial domain transmit filter. In some embodiments, a spatial domain reception filter may be referred to as a directional spatial domain reception filter.

A first terminal or a second terminal in embodiments of this application may be referred to as a user equipment (User Equipment, UE), a mobile station (Mobile Station, MS), a mobile terminal device (Mobile Terminal, MT), a subscriber unit, a subscriber station, a mobile station, a remote station, a remote terminal device, a mobile device, a user terminal device, a terminal, a wireless communications device, a user agent, or a user apparatus. The first terminal or the second terminal in embodiments of this application may include one or a combination of at least two of the following: a personal digital assistant (Personal Digital Assistant, PDA), a handheld device with a wireless communication function, a computing device or another processing device connected to a wireless modem, a server, a mobile phone (mobile phone), a tablet computer (Pad), a computer with a wireless transceiver function, a palmtop computer, a desktop computer, a personal digital assistant, a portable media player, a smart sound system, a navigation apparatus, a smart watch, smart glasses, a wearable device such as a smart necklace, a pedometer, a digital TV, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical surgery (remote medical surgery), a wireless terminal device in smart grid (smart grid), a wireless terminal device in transportation safety (transportation safety), a wireless terminal device in smart city (smart city), a wireless terminal device in smart home (smart home), a vehicle, a vehicle-mounted device, or a vehicle-mounted module in a vehicle-to-everything system, a wireless modem (modem), a handheld device (handheld), a customer-premises equipment (Customer Premise Equipment, CPE), a smart household appliance, or the like.

In addition, the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects. It should be understood that, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association relationship between A and B. It should be further understood that the term "corresponding" mentioned in embodiments of this application may mean that there is a direct or indirect correspondence between two elements, or that there is an association between two elements, or that there is a relationship of "indicating" and "being indicated", "configuring" and "being configured", or the like. It should be further understood that the "pre-defined", "protocol-specified", "pre-determined", or "pre-defined rule" mentioned in embodiments of this application may be implemented in a manner in which corresponding code, a table, or other related information used for indication is pre-stored in a device (for example, including a network device and a terminal device). A specific implementation is not limited in this application. For example, pre-defining may refer to being defined in a protocol. It should be further understood that in embodiments of this application, the "protocol" may refer to a standard protocol in the communication field, for example, may include an LTE protocol, an NR protocol, and a related protocol applied to a future communications system. This is not limited in this application.

To facilitate understanding of the technical solutions in embodiments of this application, the following describes the technical solutions in this application in detail by using specific embodiments. The foregoing solutions, as optional solutions, may be randomly combined with the technical solutions of embodiments of this application, all of which fall within the protection scope of embodiments of this application.

FIG. 12a is a schematic flowchart of a communication method according to an embodiment of this application. As shown in FIG. 12a, the method includes:
S 120 1: A first terminal determines a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information.
S1202: The first terminal sends the first sidelink information to a second terminal based on the first priority.

In some embodiments, the first priority corresponding to the first sidelink information may include the first priority corresponding to sending of the first sidelink information. In some embodiments, the first terminal may refer to a device that sends a reference signal, and the second terminal may refer to a device that receives the reference signal. In some embodiments, the first terminal may be a transmit end device, and the second terminal may be a receive end device. The transmit end device and the receive end device are not fixed in a communications system. For example, if a device A sends a reference signal to a device B, the device A may be a transmit end device. For another example, if a device C sends a reference signal to the device A, the device A may be a receive end device.

In some embodiments, in a case in which the first sidelink information includes the plurality of pieces of information listed above, the first priority corresponding to the first sidelink information may include a priority of overall transmission of the plurality of pieces of information. In this way, transmission priorities of different information in the plurality of pieces of information are equal. For example, the first sidelink information includes the reference signal and the TCI state configuration information, and a priority corresponding to transmission of the reference signal may be equal to a priority corresponding to transmission of the TCI state configuration information. In some other embodiments, in a case in which the first sidelink information includes the plurality of pieces of information listed above, the first priority corresponding to the first sidelink information may include a priority of each piece of information in the plurality of pieces of information. In this way, transmission priorities of at least two pieces of information in the plurality of pieces of information are different. For example, transmission priorities corresponding to different pieces of information in the plurality of pieces of information are different. For example, the first sidelink information includes the first reference signal resource indication information and the TCI state configuration information, and a priority corresponding to transmission of the first reference signal resource indication information may be different from a priority corresponding to transmission of the TCI state configuration information. In still some other embodiments, in a case in which the first sidelink information includes the plurality of pieces of information listed above, the first priority corresponding to the first sidelink information may be determined according to the highest priority of the plurality of pieces of information. For example, the first sidelink information includes the first reference signal resource indication information and the TCI state configuration information, a value of a priority corresponding to the first reference signal resource indication information is 2, a value of a priority corresponding to the TCI state configuration information is 4, and a smaller priority value indicates a higher priority. Therefore, the priority of the first sidelink information is determined according to the priority of the first reference signal resource indication information, that is, the value of the priority of the first sidelink information is 2. In yet some other embodiments, in a case in which the first sidelink information includes the plurality of pieces of information listed above, the first priority corresponding to the first sidelink information may be determined according to the lowest priority of the plurality of pieces of information, or may be determined according to an average, a median, or a mode of values of priorities of the plurality of pieces of information.

In some embodiments, when the first sidelink information is transmitted together with first sidelink data (for example, when the first terminal sends both the first sidelink information and the first sidelink data to the second terminal), a priority of sidelink transmission (including both the first sidelink information and the first sidelink data) is determined by a minimum value or a maximum value in values of the first priority corresponding to the first sidelink information and a priority corresponding to the first sidelink data. The minimum value is used as an example. When the first sidelink information is transmitted together with the first sidelink data, a value of the first priority corresponding to the first sidelink information is 2, and a value of the priority corresponding to the first sidelink data is 4, a value of the priority corresponding to the sidelink transmission is 2. That is, a value of a priority information field in SCI corresponding to the sidelink transmission is 2. For example, the first terminal may set the value of the priority information field in the SCI corresponding to the sidelink transmission to 2. Optionally, in a case in which the sidelink transmission overlaps another piece of sidelink information (for example, fourth sidelink information) in time domain and/or in a case in which the sidelink transmission overlaps uplink information in time domain, the first terminal may send the sidelink transmission based on that the value of the priority corresponding to the sidelink transmission is 2.

Optionally, the first sidelink information and the first sidelink data may be transmitted on a same resource block.

In some embodiments, the reference signal may be sent by the first terminal to the second terminal. The second terminal may determine a measurement result and/or second reference signal resource indication information, and send the measurement result and/or the second reference signal resource indication information to the first terminal. At least one of the TCI state configuration information, the TCI state indication information, or the first reference signal resource indication information is sent by the first terminal to the second terminal. The first indication information and/or the second indication information are sent by the first terminal to the second terminal. The third indication information is sent by the first terminal to the second terminal.

In some embodiments, the TCI state configuration information may also be referred to as TCI state set configuration information. In some embodiments, the TCI state configuration information is used to configure one or more TCI states or is used to configure a TCI state set.

In some embodiments, the reference signal may include a CSI-RS, second reference signal resource indication information may include first CSI-RS resource indication information, and the first reference signal resource indication information may include second CSI-RS resource indication information.

In some embodiments, second reference signal resource indication information may be used to indicate a first target reference signal or a resource corresponding to the first target reference signal. In some embodiments, the first target reference signal or the resource corresponding to the first target reference signal is selected from a plurality of reference signals sent by the first terminal to the second terminal or resources corresponding to the plurality of reference signals, and the first target reference signal may include one or more reference signals. In some embodiments, the second terminal receives a plurality of reference signals sent by the first terminal, performs measurement, and selects a first target reference signal from the reference signals according to a measurement result. Then, the second terminal sends second reference signal resource indication information to the first terminal, where the second reference signal resource indication information is used to indicate a resource corresponding to the first target reference signal.

In some other embodiments, second reference signal resource indication information is used to indicate resources of a plurality of first target reference signals.

In some embodiments, the first reference signal resource indication information is used to indicate a second target reference signal or a resource corresponding to the second target reference signal. In some embodiments, the resource corresponding to the second target reference signal may be selected by the first terminal from resources of first target reference signals indicated by second reference signal resource indication information. For example, the second target reference signal is selected from the first target reference signals indicated by the second reference signal resource indication information. In some embodiments, the second target reference signal and the first target reference signal may be identical, or the second target reference signal and the first target reference signal may be different. In some embodiments, the second target reference signal indicated by the first reference signal resource indication information may be one of the first target reference signals indicated by the second reference signal resource indication information.

In embodiments of this application, a first terminal determines a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and the first terminal sends the first sidelink information to a second terminal based on the first priority. In this way, the first terminal can determine the first priority corresponding to the first sidelink information. Therefore, in a case in which transmission of the first sidelink information conflicts with that of other information, the first terminal can resolve the transmission conflict by using the first priority corresponding to the first sidelink information. This improves reliability of information transmission.

In some embodiments, that the first terminal sends the first sidelink information to a second terminal based on the first priority includes: in a case in which a time domain resource of the first sidelink information overlaps that of fourth sidelink information, determining, by the first terminal, a second priority corresponding to the fourth sidelink information; and in a case in which a value of the first priority is less than a value of the second priority, sending, by the first terminal, the first sidelink information to the second terminal. In some embodiments, that a time domain resource of the first sidelink information overlaps that of fourth sidelink information may include: that the first sidelink information overlaps the fourth sidelink information in one or more time units. The time unit may include a subframe, a slot, a symbol, or the like.

In some embodiments, in a case in which the time domain resource of the first sidelink information overlaps that of the fourth sidelink information, the first terminal may determine the first priority and the second priority.

In some embodiments, a smaller priority value corresponds to a higher priority. For example, if the value of the first priority is less than the value of the second priority, the first priority is higher than the second priority.

Optionally, the second priority corresponding to the fourth sidelink information may include the second priority corresponding to transmission of the fourth sidelink information. The transmission of the fourth sidelink information may include sending and/or receiving of the fourth sidelink information, and the first priority corresponding to the first sidelink information may be a priority corresponding to sending of the first sidelink information, or the first priority corresponding to the first sidelink information may be a priority of the first sidelink information. The second priority corresponding to the fourth sidelink information may be a priority corresponding to sending and/or receiving of the fourth sidelink information, or the second priority corresponding to the fourth sidelink information may be a priority of the fourth sidelink information. A priority corresponding to the sending of the fourth sidelink information may be equal to or different from a priority corresponding to the receiving of the fourth sidelink information. Optionally, in a case in which there are a plurality of priorities corresponding to the fourth sidelink information, the second priority may be any one of the plurality of priorities. For example, the second priority may be the priority corresponding to the sending of the fourth sidelink information, or the second priority may be the highest priority or the lowest priority in the plurality of priorities.

Optionally, in a case in which the value of the first priority is greater than the value of the second priority, the first terminal transmits the fourth sidelink information.

Optionally, in a case in which the value of the first priority is less than the value of the second priority, the first terminal sends the first sidelink information to the second terminal. Optionally, the first terminal delays or discards transmission of the fourth sidelink information. Optionally, if the transmission of the fourth sidelink information corresponds to sending of the fourth sidelink information, and a power of sending both the first sidelink information and the fourth sidelink information exceeds a maximum transmit power, a transmit power of the fourth sidelink information is firstly reduced until the power of sending both the fourth sidelink information and the first sidelink information does not exceed the maximum transmit power.

Optionally, in a case in which the value of the first priority is greater than the value of the second priority, the first terminal transmits the fourth sidelink information. Optionally, the first terminal delays or discards transmission of the first sidelink information. Optionally, if transmission of the fourth sidelink information corresponds to sending of the fourth sidelink information, and a power of sending both the first sidelink information and the fourth sidelink information exceeds a maximum transmit power, a transmit power of the first sidelink information is firstly reduced until the power of sending both the fourth sidelink information and the first sidelink information does not exceed the maximum transmit power.

In some embodiments, that the first terminal sends the first sidelink information to a second terminal based on the first priority includes: in a case in which a time domain resource of the first sidelink information overlaps that of uplink transmission, a value of a priority index corresponding to the uplink transmission is a first value, a first priority threshold is configured, and a value of the first priority is less than the first priority threshold, sending, by the first terminal, the first sidelink information to the second terminal.

It should be noted that, in the foregoing embodiments, a case in which the first sidelink information overlaps the fourth sidelink information in time domain is used as an example for description. If the first sidelink information is transmitted together with first sidelink data, a priority of sidelink transmission (including both the first sidelink information and the first sidelink data) is determined by a minimum value or a maximum value in values of the first priority corresponding to the first sidelink information and a priority corresponding to the first sidelink data. For example, the first priority corresponding to the first sidelink information in the foregoing embodiments may be replaced with the priority corresponding to the sidelink transmission. The foregoing embodiments are also applicable, and details are not described in this application.

In some embodiments, that a time domain resource of the first sidelink information overlaps that of uplink transmission may include: that the first sidelink information overlaps the uplink transmission in one or more time units. The time unit may include a subframe, a slot, a symbol, or the like.

In some embodiments, in a case in which the time domain resource of the first sidelink information overlaps that of the uplink transmission, the first terminal may determine the first priority. In some embodiments, the first value may be 1. The first priority threshold may be sl-PriorityThreshold-UL-URLLC. In some embodiments, the first terminal obtains the first priority threshold according to pre-configuration information or network configuration information.

In some embodiments, while the first terminal sends the first sidelink information to the second terminal, the first terminal may further delay or discard transmission of uplink information. Optionally, if a power of sending both the uplink information and the first sidelink information exceeds a maximum transmit power, a transmit power of the uplink information is firstly reduced until the power of sending both the uplink information and the first sidelink information does not exceed the maximum transmit power.

In some embodiments, the method further includes: in a case in which a time domain resource of the first sidelink information overlaps that of uplink transmission, a value of a priority index corresponding to the uplink transmission is a first value, and a first priority threshold is not configured, transmitting, by the first terminal, uplink information. Optionally, the first terminal delays or discards transmission of the first sidelink information. Optionally, if a power of sending both the first sidelink information and the uplink information exceeds a maximum transmit power, a transmit power of the first sidelink information is firstly reduced until the power of sending both the uplink information and the first sidelink information does not exceed the maximum transmit power.

In some embodiments, the method further includes: in a case in which a time domain resource of the first sidelink information overlaps that of uplink transmission, a value of a priority index corresponding to the uplink transmission is a first value, a first priority threshold is configured, and a value of the first priority is greater than or equal to the first priority threshold, transmitting, by the first terminal, uplink information. Optionally, the first terminal delays or discards transmission of the first sidelink information. Optionally, if a power of sending both the first sidelink information and the uplink information exceeds a maximum transmit power, a transmit power of the first sidelink information is firstly reduced until the power of sending both the uplink information and the first sidelink information does not exceed the maximum transmit power.

In some embodiments, that the first terminal sends the first sidelink information to a second terminal based on the first priority includes: in a case in which a time domain resource of the first sidelink information overlaps that of uplink transmission, and a value of a priority index corresponding to the uplink transmission is a second value, obtaining, by the first terminal, a second priority threshold; and in a case in which a value of the first priority is less than the second priority threshold, sending, by the first terminal, the first sidelink information to the second terminal.

In some embodiments, in a case in which the time domain resource of the first sidelink information overlaps that of the uplink transmission, the first terminal may determine the first priority. In some embodiments, the second value may be a value other than 1, for example, the second value may be 0. The second priority threshold may be sl-PriorityThreshold. In some embodiments, the first terminal obtains the second priority threshold according to pre-configuration information or network configuration information.

In some embodiments, the method further includes: in a case in which a time domain resource of the first sidelink information overlaps that of uplink transmission, and a value of a priority index corresponding to the uplink transmission is a second value, obtaining, by the first terminal, a second priority threshold; and in a case in which a value of the first priority is greater than or equal to the second priority threshold, transmitting, by the first terminal, uplink information. Optionally, the first terminal delays or discards transmission of the first sidelink information. Optionally, if a power of sending both the first sidelink information and the uplink information exceeds a maximum transmit power, a transmit power of the first sidelink information is firstly reduced until the power of sending both the uplink information and the first sidelink information does not exceed the maximum transmit power.

It should be noted that, in the foregoing embodiments, a case in which the first sidelink information overlaps the uplink transmission in time domain is used as an example for description. If the first sidelink information is transmitted together with first sidelink data, a priority of sidelink transmission (including both the first sidelink information and the first sidelink data) is determined by a minimum value or a maximum value in values of the first priority corresponding to the first sidelink information and a priority corresponding to the first sidelink data. For example, the first priority corresponding to the first sidelink information in the foregoing embodiments may be replaced with the priority corresponding to the sidelink transmission. The foregoing embodiments are also applicable, and details are not described in this application.

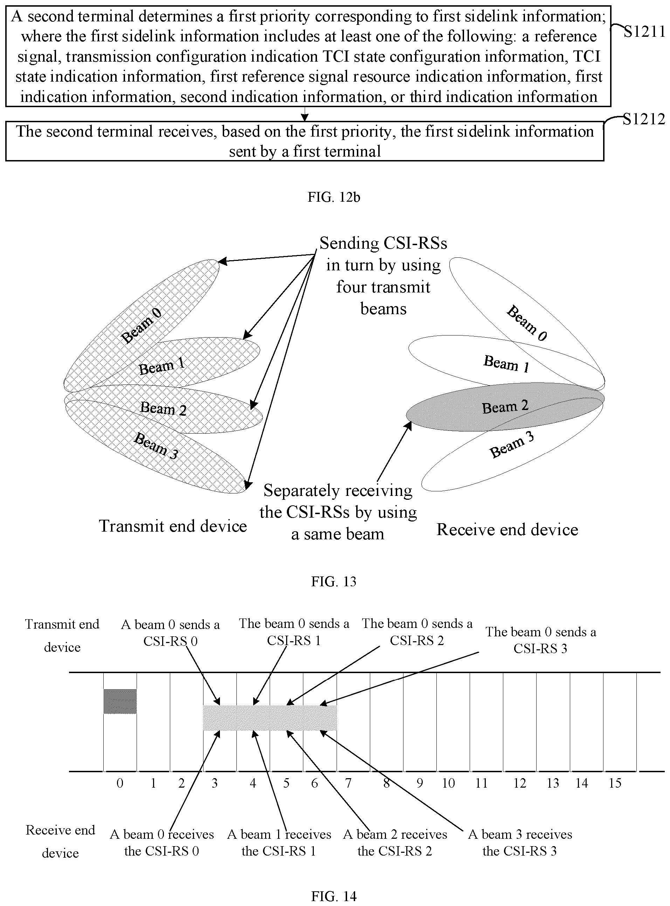

FIG. 12b is a schematic flowchart of another communication method according to an embodiment of this application. As shown in FIG. 12b, the method includes:
S1211: A second terminal determines a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information.
S1212: The second terminal receives, based on the first priority, the first sidelink information sent by a first terminal.

In some embodiments, when the first sidelink information is transmitted together with first sidelink data (for example, when the first terminal sends both the first sidelink information and the first sidelink data to the second terminal), a priority of sidelink transmission (including both the first sidelink information and the first sidelink data) is determined by a minimum value or a maximum value in values of the first priority corresponding to the first sidelink information and a priority corresponding to the first sidelink data. The minimum value is used as an example. When the first sidelink information is transmitted together with the first sidelink data, a value of the first priority corresponding to the first sidelink information is 2, and a value of the priority corresponding to the first sidelink data is 4, a value of the priority corresponding to the sidelink transmission is 2. That is, a value of a priority information field in SCI corresponding to the sidelink transmission is 2. For example, the second terminal may set the value of the priority information field in the SCI corresponding to the sidelink transmission to 2. Optionally, in a case in which the sidelink transmission overlaps another piece of sidelink information (for example, fourth sidelink information) in time domain and/or in a case in which the sidelink transmission overlaps uplink information in time domain, the second terminal may receive the sidelink transmission based on that the value of the priority corresponding to the sidelink transmission is 2.

In some embodiments, that the second terminal receives, based on the first priority, the first sidelink information sent by a first terminal includes: in a case in which a time domain resource of the first sidelink information overlaps that of fourth sidelink information, determining, by the second terminal, a second priority corresponding to the fourth sidelink information; and in a case in which a value of the first priority is less than a value of the second priority, receiving, by the second terminal, the first sidelink information sent by the first terminal.

In some embodiments, in a case in which the time domain resource of the first sidelink information overlaps that of the fourth sidelink information, the second terminal determines the first priority and the second priority.

In some embodiments, in a case in which the time domain resource of the first sidelink information overlaps that of the fourth sidelink information, the second terminal may determine receiving of the first sidelink information or transmission of the fourth sidelink information. The transmission of the fourth sidelink information may include receiving of the fourth sidelink information and/or sending of the fourth sidelink information.

In some embodiments, in a case in which the time domain resource of the first sidelink information overlaps that of the fourth sidelink information, and the value of the first priority is less than the value of the second priority, the second terminal determines the receiving of the first sidelink information; or in a case in which the time domain resource of the first sidelink information overlaps that of the fourth sidelink information, and the value of the first priority is greater than or equal to the value of the second priority, the second terminal determines the transmission of the fourth sidelink information.

In some embodiments, on the second terminal side, the transmission of the fourth sidelink information corresponds to the receiving of the fourth sidelink information. The second terminal determines to receive the fourth sidelink information by using a first spatial domain reception filter, and to receive the first sidelink information by using a second spatial domain reception filter, where the first spatial domain reception filter is different from the second spatial domain reception filter. In a case in which the time domain resource of the first sidelink information overlaps that of the fourth sidelink information, and the value of the first priority is less than the value of the second priority, the second terminal determines the receiving of the first sidelink information. In a case in which the time domain resource of the first sidelink information overlaps that of the fourth sidelink information, and the value of the first priority is greater than the value of the second priority, the second terminal determines the receiving of the fourth sidelink information.

For example, in a case in which the value of the first priority is less than the value of the second priority, the second terminal determines the receiving of the first sidelink information, and does not receive the fourth sidelink information, or delays the transmission of the fourth sidelink information, or discards the transmission of the fourth sidelink information. For another example, in a case in which the value of the first priority is greater than the value of the second priority, the second terminal determines the transmission of the fourth sidelink information, and does not receive the first sidelink information.

It should be noted that, in the foregoing embodiments, a case in which the first sidelink information overlaps the fourth sidelink information in time domain is used as an example for description. If the first sidelink information is transmitted together with first sidelink data, a priority of sidelink transmission (including both the first sidelink information and the first sidelink data) is determined by a minimum value or a maximum value in values of the first priority corresponding to the first sidelink information and a priority corresponding to the first sidelink data. For example, the first priority corresponding to the first sidelink information in the foregoing embodiments may be replaced with the priority corresponding to the sidelink transmission. The foregoing embodiments are also applicable, and details are not described in this application.

In some embodiments, that the second terminal receives, based on the first priority, the first sidelink information sent by a first terminal includes: in a case in which a time domain resource of the first sidelink information overlaps that of uplink transmission, a value of a priority index corresponding to the uplink transmission is a first value, a first priority threshold is configured, and a value of the first priority is less than the first priority threshold, receiving, by the second terminal, the first sidelink information sent by the first terminal.

In some embodiments, in a case in which the time domain resource of the first sidelink information overlaps that of the uplink transmission, the second terminal may determine the first priority.

In some embodiments, while the second terminal receives the first sidelink information sent by the first terminal, the second terminal may further delay or discard transmission of uplink information.

In some embodiments, the method further includes: in a case in which a time domain resource of the first sidelink information overlaps that of uplink transmission, a value of a priority index corresponding to the uplink transmission is a first value, and a first priority threshold is not configured, transmitting, by the second terminal, uplink information. Optionally, the second terminal does not receive the first sidelink information.

In some embodiments, the method further includes: in a case in which a time domain resource of the first sidelink information overlaps that of uplink transmission, a value of a priority index corresponding to the uplink transmission is a first value, a first priority threshold is configured, and a value of the first priority is greater than or equal to the first priority threshold, transmitting, by the second terminal, uplink information. Optionally, the second terminal does not receive the first sidelink information.

In some embodiments, that the second terminal receives, based on the first priority, the first sidelink information sent by a first terminal includes: in a case in which a time domain resource of the first sidelink information overlaps that of uplink transmission, and a value of a priority index corresponding to the uplink transmission is a second value, obtaining, by the second terminal, a second priority threshold; and in a case in which a value of the first priority is less than the second priority threshold, receiving, by the second terminal, the first sidelink information sent by the first terminal.

In some embodiments, while the second terminal receives the first sidelink information sent by the first terminal, the second terminal may delay or discard transmission of uplink information.

Optionally, the first priority threshold may be sl-PriorityThreshold-UL-URLLC. Optionally, the second priority threshold may be sl-Priority Threshold. In some embodiments, the second terminal may obtain the first priority threshold and/or the second priority threshold according to pre-configuration information or network configuration information.

In some embodiments, the method further includes: in a case in which a time domain resource of the first sidelink information overlaps that of uplink transmission, and a value of a priority index corresponding to the uplink transmission is a second value, obtaining, by the second terminal, a second priority threshold; and in a case in which a value of the first priority is greater than or equal to the second priority threshold, transmitting, by the second terminal, uplink information. Optionally, the second terminal discards receiving of the first sidelink information or does not receive the first sidelink information.

In some embodiments, a priority of at least one of the following may further be higher than the first priority, or a value of a priority corresponding to at least one of the following may be less than the value of the first priority: transmission of a physical random access channel (Physical Random Access Channel, PRACH), a PUSCH that is scheduled by a random access response (Random Access Response, RAR) grant in a RAR and retransmission of the PUSCH, a PUSCH that is used for a Type-2 random access procedure and retransmission of the PUSCH, a PUCCH with hybrid automatic repeat request-acknowledgment (Hybrid Automatic Retransmit ReQuest-Acknowledgment, HARQ-ACK) information in response to a successful RAR, or a PUCCH that is indicated by a DCI format 1_0 scrambled by a corresponding temporary cell radio network temporary identifier (Temporary Cell Radio Network Temporary Identifiers, TC-RNTI).

It should be noted that, in the foregoing embodiments, a case in which the first sidelink information overlaps the uplink transmission in time domain is used as an example for description. If the first sidelink information is transmitted together with first sidelink data, a priority of sidelink transmission (including both the first sidelink information and the first sidelink data) is determined by a minimum value or a maximum value in values of the first priority corresponding to the first sidelink information and a priority corresponding to the first sidelink data. For example, the first priority corresponding to the first sidelink information in the foregoing embodiments may be replaced with the priority corresponding to the sidelink transmission. The foregoing embodiments are also applicable, and details are not described in this application.

In some embodiments, the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

In some embodiments, the first indication information is used to instruct the first terminal to start a process of selecting a spatial domain transmission filter. In some embodiments, the second indication information is used to instruct the first terminal to start a process of selecting a spatial domain reception filter.

The following describes the reference signal. In some embodiments, the reference signal is used for at least one of the following:
selection of a spatial domain transmission filter;
selection of a spatial domain reception filter; or
measurement of channel state information CSI, where the CSI includes at least one of the following: a channel quality indicator (Channel Quality Indicator, CQI), a rank indicator (Rank Indicator, RI), or a precoding matrix indicator (Precoding Matrix Indicator, PMI).

In a case in which the reference signal is used for selection of a spatial domain transmission filter, the first terminal may send the reference signal (for example, a CSI-RS) by using different spatial domain transmission filters. The second terminal may receive the reference signal by using a same spatial domain reception filter, measure the reference signal, and determine a target reference signal according to the measurement result. For example, the second terminal may select a reference signal corresponding to the highest measurement result as the target reference signal. The second terminal feeds back or reports a resource of the target reference signal to the first terminal, and the first terminal may determine a corresponding optimal spatial domain transmission filter according to the target reference signal.

In a case in which the reference signal is used for selection of a spatial domain reception filter, the first terminal may send the reference signal (for example, a CSI-RS) by using a same spatial domain transmission filter, the second terminal may receive the reference signal by using different spatial domain reception filters, measure the reference signal, and select a spatial domain reception filter according to the measurement result. For example, the second terminal may select a spatial domain reception filter corresponding to a reference signal with the highest measurement result.

In a case in which the reference signal is used for measurement of channel state information CSI, the first terminal sends the reference signal (for example, a CSI-RS), and the second terminal receives and measures the reference signal, to obtain a measurement result of at least one of a channel quality indicator CQI, a rank indicator RI, or a precoding matrix indicator PMI, and reports the measurement result to the first terminal.

In some embodiments, in a case in which the reference signal is used for selection of a spatial domain reception filter, transmission of the reference signal has the highest priority.

In some embodiments, in a case in which transmission of a reference signal has the highest priority, a terminal transmits the reference signal regardless of whether the transmission of the reference signal conflicts with transmission of any other sidelink information.

An example in which the reference signal includes a CSI-RS is used for description herein. The CSI-RS may be used for selection of a spatial domain filter, including selection of a spatial domain transmission filter and selection of a spatial domain reception filter. Alternatively, the CSI-RS may be used for measurement of CSI, where the CSI includes a CQI, an RI, or a PMI.

In some embodiments, in a sidelink system, if data is transmitted by using a spatial domain filter, the first terminal needs to determine an optimal spatial domain transmission filter. Optionally, the second terminal needs to determine an optimal spatial domain reception filter. In the foregoing process of determining a spatial domain filter, the first terminal needs to send a sidelink CSI-RS.

In a process of determining a spatial domain transmission filter, the following manner is generally used: The first terminal sends CSI-RSs in turn by using different spatial domain transmission filters, and the different spatial domain transmission filters correspond to different CSI-RS resources. The second terminal separately receives, by using a same spatial domain reception filter, the plurality of CSI-RSs sent by the first terminal, measures detected CSI-RSs, selects a CSI-RS resource with an optimal measurement result, and feeds back resource information (for example, a CSI-RS resource index) corresponding to the CSI-RS resource to the first terminal. A spatial domain transmission filter corresponding to the CSI-RS resource is the optimal spatial domain transmission filter for the first terminal.

It should be understood that, in the process of determining the spatial domain transmission filter, that the first terminal sends CSI-RSs in turn by using different spatial domain transmission filters includes: Each CSI-RS sent by a transmit end corresponds to a different spatial domain transmission filter, or the transmit end does not send the CSI-RSs by using a same spatial domain transmission filter. This is not limited in this application.

FIG. 13 is a schematic diagram of determining an optimal transmit beam according to an embodiment of this application. As shown in FIG. 13, a first terminal sends CSI-RSs in turn by using four transmit beams (a beam 1, a beam 2, a beam 3, and a beam 4), and a second terminal separately receives the CSI-RSs by using a same receive beam (a beam 2), measures detected CSI-RSs, and selects an optimal transmit beam with an optimal measurement result.

Optionally, if a CSI-RS is used to determine a spatial domain reception filter, the CSI-RS has the highest priority.

In a process of determining the spatial domain reception filter, the first terminal sends CSI-RSs in turn by using a same spatial domain transmission filter, and the second terminal respectively receives, by using different spatial domain reception filters, the CSI-RSs sent by the first terminal, performs measurement, and selects an optimal spatial domain reception filter according to a measurement result. However, when the first terminal performs resource selection based on a mode 2 to obtain a transmission resource for sending a CSI-RS, the transmission resource may be preempted by another device with a higher priority, so that the first terminal needs to perform resource re-selection. However, in this case, it is difficult for the second terminal to receive the CSI-RS by using a corresponding spatial domain reception filter. Therefore, to prevent a transmission resource of the first terminal from being preempted by another device when the first terminal sends a CSI-RS used to determine a spatial domain reception filter, it may be configured that the CSI-RS has the highest sidelink priority.

It should be understood that in the process of determining the spatial domain reception filter, that the second terminal receives CSI-RSs by using different spatial domain reception filters includes: A receive end receives each of the CSI-RSs by using a different spatial domain reception filter, or the receive end does not receive the CSI-RSs by using a same spatial domain reception filter, which is not limited in this application.

FIG. 14 is a schematic diagram of a manner of determining a receive beam according to an embodiment of this application. As shown in FIG. 14, a first terminal obtains a transmission resource for sending a CSI-RS, and sends indication information to a second terminal in a slot 0, to indicate the resource using which a CSI-RS is to be sent. That is, the first terminal is to transmit CSI-RSs (including a CSI-RS 0, a CSI-RS 1, a CSI-RS 2, and a CSI-RS 3) in slots 3, 4, 5, and 6 by using a transmit beam 0. Because the CSI-RSs have the highest priority, resource re-selection does not occur in a process of sending the CSI-RSs by the first terminal. The second terminal may determine, according to the indication information, the resource of the first terminal using which a CSI-RS is to be sent. Therefore, the second terminal receives the CSI-RSs (including the CSI-RS 0, the CSI-RS 1, the CSI-RS 2, and the CSI-RS 3) for corresponding transmission resources (for example, the slots 3, 4, 5, and 6) by using different receive beams (a beam 0, a beam 1, a beam 2, and a beam 3).

In some embodiments, second reference signal resource indication information is used to indicate a target reference signal resource, and the target reference signal resource is selected by the second terminal according to a measurement result.

In some embodiments, TCI state configuration information includes at least one of the following: a TCI state identifier, a target reference signal identifier, or a quasi co-located QCL type;
the TCI state identifier is used to indicate or identify a TCI state;
the target reference signal identifier is used to indicate or identify a target reference signal, and the target reference signal includes one or more of the following: a CSI-RS, a PSCCH DMRS, a PSSCH DMRS, or a PT-RS; and
the QCL type indicates a TypeD type.

In some embodiments, TCI state configuration information is used by the first terminal to configure a TCI-state set for the second terminal.

In some embodiments, QCL-TypeD indicates that the second terminal performs reception by using a same spatial domain reception parameter (or a spatial domain reception filter) as a reference signal associated with the indicated or identified TCI state; or indicates that the first terminal uses a same spatial domain transmission filter as a reference signal associated with the TCI state.

In an implementation process, the second terminal reports or feeds back, to the first terminal, information about P CSI-RS resources and a measurement result corresponding to the information about the P CSI-RS resources, where P is an integer greater than or equal to 1, and the first terminal selects one CSI-RS from the P CSI-RS resources, and performs sidelink transmission by using a spatial domain transmission filter corresponding to the CSI-RS. When the second terminal feeds back the P CSI-RS resources to the first terminal, the first terminal may consider that all spatial domain transmission filters corresponding to the P CSI-RS resources are available spatial domain transmission filters. The first terminal configures a TCI state set for the second terminal, where each TCI state in the TCI state set corresponds to a reference signal resource, and the reference signal resource is one of the P CSI-RS resources. The first terminal selects one CSI-RS resource from the P CSI-RS resources as a target CSI-RS resource (for example, selects a CSI-RS resource corresponding to an optimal measurement result), and uses a spatial domain transmission filter corresponding to the CSI-RS resource as a target spatial domain transmission filter. Then, the first terminal sends sidelink data to the second terminal by using the target spatial domain transmission filter, and notifies the second terminal of the target CSI-RS resource, for example, indicates a TCI state, where a reference signal of the TCI state is the target CSI-RS resource, and a QCL type is QCL-TypeD. The second terminal learns of the target CSI-RS resource according to the TCI state, and then may receive, by using a same spatial domain reception filter as that for receiving the target CSI-RS resource, the sidelink data sent by the first terminal.

Optionally, if the first terminal may determine that the spatial domain transmission filter fails, the first terminal re-selects a spatial domain transmission filter. Optionally, the first terminal may select, from the P CSI-RS resources, another CSI-RS resource other than the foregoing target CSI-RS resource as a new target CSI-RS resource, use a spatial domain transmission filter corresponding to the target CSI-RS resource as a new target spatial domain transmission filter, and perform sidelink transmission by using the new target spatial domain transmission filter.

In some embodiments, a correspondence between a reference signal and a spatial domain transmission filter may be indicated in a manner of configuring a TCI state.

In some embodiments, TCI state indication information is used to indicate at least one of the following:
a reference signal associated with the TCI state indication information;
a spatial domain reception filter that needs to be used by the second terminal; or
a spatial domain transmission filter used by the first terminal.

In some embodiments, in a case in which TCI state indication information is received, the second terminal may determine reference signal information associated with the TCI state indication information, and further determine, based on the reference signal information, a spatial domain reception filter that needs to be used by the second terminal and/or a spatial domain transmission filter used by the first terminal. Optionally, the reference signal information may be a reference signal and/or an identifier of a reference signal and/or a resource of a reference signal.

In some embodiments, the TCI state indication information includes a TCI state identifier, where the TCI state identifier is used to indicate or identify a TCI state.

In some embodiments, the TCI state indication information is applied to or applicable to transmission of second sidelink information after a first moment; and a time interval between the first moment and a second moment is greater than or equal to first duration, and the second moment is determined according to a time domain position of the TCI state indication information. That is, the second terminal determines a spatial domain reception filter according to the TCI state indication information, and receives the second sidelink information by using the spatial domain reception filter. Alternatively, the second terminal determines, according to the TCI state indication information, the spatial domain transmission filter used by the first terminal, and the second terminal determines that the first terminal sends the second sidelink information by using the spatial domain transmission filter.

In some embodiments, the first duration is determined according to protocol pre-defined information, pre-configuration information, or network configuration information.

In some embodiments, the first duration is determined according to a processing time of the second terminal, and the processing time includes a time during which the second terminal obtains the TCI state indication information and applies the TCI state indication information to the transmission of the second sidelink information. In some embodiments, the second terminal obtains the TCI state indication information from received sidelink control information SCI or a received medium access control control element MAC CE.

In some embodiments, the first duration is one or more orthogonal frequency division multiplexing OFDM symbols.

Optionally, the second sidelink information may include a sidelink reference signal, sidelink feedback information, sidelink control information, and/or sidelink data information.

In some embodiments, the TCI state indication information is used for determining a spatial domain transmission filter for the second terminal to send a physical sidelink feedback channel PSFCH. In this case, for the second terminal side, the second terminal may determine, based on the TCI state indication information, a spatial domain transmission filter for the second terminal to send a physical sidelink feedback channel PSFCH.

In some embodiments, the determining a spatial domain transmission filter for the second terminal to send a physical sidelink feedback channel PSFCH includes: determining a spatial domain reception filter corresponding to the TCI state indication information; determining a spatial domain transmission filter based on the spatial domain reception filter; and determining the spatial domain transmission filter as the spatial domain transmission filter for sending the PSFCH.

In an implementation process, the first terminal indicates the TCI state indication information to the second terminal, and the second terminal may determine, according to the TCI state indication information, reference signal information associated with the TCI state indication information, and further determine a spatial domain reception filter that needs to be used by the second terminal and/or a spatial domain transmission filter used by the first terminal. Optionally, the TCI state indication information includes a TCI state identifier. Optionally, the TCI state indication information is applicable to sidelink transmission after a first moment, where a time interval between the first moment and a second moment is greater than or equal to first duration. The first duration is determined according to protocol pre-defined information, pre-configuration information, or network configuration information. The second moment is determined according to a time domain position in which the TCI state indication information is located. For example, the second moment is determined according to an end position of the last time domain symbol (that is, an end edge moment of the last time domain symbol) or a start location of the first time domain symbol (that is, a start edge moment of the first time domain symbol) in time domain symbols in which the TCI state indication information is located.

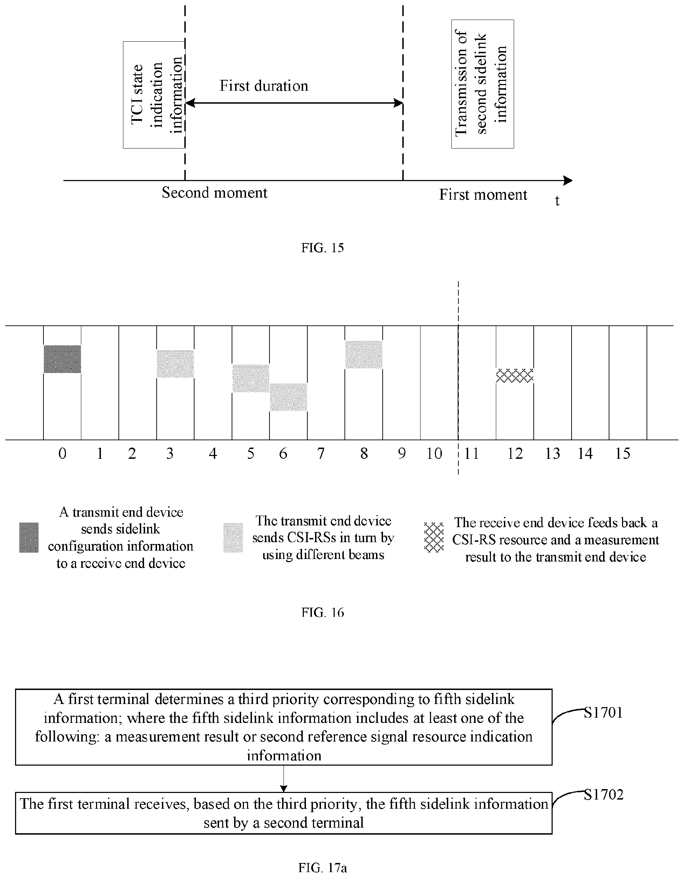

FIG. 15 is a schematic diagram of transmission of second sidelink information after TCI state indication information is received according to an embodiment of this application. As shown in FIG. 15, a first terminal needs to perform transmission of second sidelink information at a first moment. In this case, the first terminal may indicate TCI state indication information by using SCI at a second moment before the first moment, and a time interval between the second moment and the first moment is greater than or equal to first duration.

Optionally, the first duration is used to indicate a processing time, and may be represented by a quantity of OFDM symbols. Optionally, the processing time includes a time from a moment when a second terminal obtains TCI state information from received SCI (or a received medium access control control element (Medium Access Control Control Element, MAC CE)) to a moment when the second terminal applies the TCI state information to receiving of a PSCCH or a PSSCH.

Optionally, the TCI state indication information is used by the second terminal to determine a transmit beam (a spatial domain transmission filter) of a PSFCH. When the first terminal sends sidelink data to the second terminal, and instructs to activate a sidelink feedback, the second terminal needs to send sidelink feedback information of the sidelink data to the first terminal. The second terminal may determine, according to the TCI state information sent by the first terminal, the transmit beam for sending the PSFCH. For example, the second terminal has a beam correspondence (beam correspondence) capability, that is, may determine a corresponding transmit beam according to a receive beam (spatial domain reception filter). When obtaining TCI state indication information sent by the first terminal, the second terminal may determine a corresponding receive beam according to the TCI state indication information, further determine a corresponding transmit beam according to a beam correspondence, and send the PSFCH by using the transmit beam. Optionally, the beam correspondence capability may also be referred to as a spatial domain filter correspondence capability.

In some embodiments, first reference signal resource indication information is used by the second terminal to determine a spatial domain reception filter and/or a spatial domain transmission filter used by the first terminal. In this case, for the second terminal side, the second terminal may determine, based on the first reference signal resource indication information, the spatial domain reception filter used by the second terminal and/or the spatial domain transmission filter used by the first terminal.

In some embodiments, the first reference signal resource indication information is sent by the first terminal to the second terminal in a case in which the first terminal is not configured to send the TCI state configuration information and/or the TCI state indication information to the second terminal.

In an implementation process, in a case in which the first terminal is configured to send the TCI state configuration information to the second terminal, the first terminal sends the TCI state configuration information to the second terminal. In a case in which the first terminal is configured to send the TCI state indication information to the second terminal, the first terminal sends the TCI state indication information to the second terminal. In a case in which the first terminal is configured to send the TCI state configuration information and the TCI state indication information to the second terminal, the first terminal sends the TCI state configuration information and/or the TCI state indication information to the second terminal.

In some embodiments, the first reference signal resource indication information is applied to or applicable to transmission of third sidelink information after a third moment; and a time interval between the third moment and a fourth moment is greater than or equal to second duration, and the fourth moment is determined according to a time domain position in which the first reference signal resource indication information is located. That is, the second terminal determines a spatial domain reception filter according to the first reference signal resource indication information, and receives the third sidelink information by using the spatial domain reception filter. Alternatively, the second terminal determines, according to the first reference signal resource indication information, the spatial domain transmission filter used by the first terminal, and the second terminal considers that the first terminal sends the third sidelink information by using the spatial domain transmission filter.

In some embodiments, the second duration is determined according to protocol pre-defined information, pre-configuration information, or network configuration information.

In some embodiments, the second duration is determined according to a processing time of the second terminal. The processing time includes a time during which the second terminal obtains the first reference signal resource indication information and applies the first reference signal resource indication information to transmission of the third sidelink information. In some embodiments, the second terminal obtains the first reference signal resource indication information from received sidelink control information SCI or a received medium access control control element MAC CE.

In some embodiments, the second duration is one or more orthogonal frequency division multiplexing OFDM symbols.

Optionally, the third sidelink information may include a sidelink reference signal, sidelink feedback information, sidelink control information, and/or sidelink data information.

In some embodiments, the first reference signal resource indication information is used for determining a spatial domain transmission filter for the second terminal to send a PSFCH. In this case, for the second terminal side, the second terminal may determine, based on the first reference signal resource indication information, the spatial domain transmission filter for the second terminal to send the PSFCH.

In some embodiments, the determining a spatial domain transmission filter for the second terminal to send a PSFCH includes: determining a spatial domain reception filter corresponding to the first reference signal resource indication information; determining a spatial domain transmission filter based on the spatial domain reception filter; and determining the spatial domain transmission filter as the spatial domain transmission filter for sending the PSFCH.

The following uses an example in which the first reference signal resource indication information includes CSI-RS resource indication information for description. The first terminal sends the CSI-RS resource indication information to the second terminal.

When the second terminal reports CRI information to the first terminal, if the first terminal does not configure a TCI state set for the second terminal, the first terminal may indicate selected CRI information, and send indication information to the second terminal, where the indication information is used to indicate the CRI information selected by the first terminal. The second terminal may determine, according to the CRI information, a corresponding spatial domain reception filter and/or information about a spatial domain transmission filter of the first terminal. Optionally, the CSI-RS resource indication information is applicable to sidelink transmission after a third moment, a time interval between the third moment and a fourth moment is greater than or equal to second duration, and the second duration is determined according to protocol pre-defined information, pre-configuration information, or network configuration information. The fourth moment is determined according to a time domain position in which the CSI-RS resource indication information is located.

Optionally, the first duration and the second duration may be equal or different.

Optionally, the CSI-RS resource indication information is used by the second terminal to determine a transmit beam (spatial domain transmission filter) of a PSFCH. When the first terminal sends sidelink data to the second terminal, and instructs to activate a sidelink feedback, the second terminal needs to send sidelink feedback information of the sidelink data to the first terminal. The second terminal may determine, according to the CSI-RS resource indication information sent by the first terminal, the transmit beam for sending the PSFCH. For example, the second terminal has a beam correspondence (beam correspondence) capability, that is, the second terminal may determine a corresponding transmit beam according to a receive beam (spatial domain reception filter). When obtaining CSI-RS resource indication information sent by the first terminal, the second terminal may determine a corresponding receive beam according to the CSI-RS resource indication information, further determine a corresponding transmit beam according to a beam correspondence, and send the PSFCH by using the transmit beam.

In some embodiments, for the first terminal side, in a process of selecting a spatial domain transmission filter, the first terminal sends a reference signal by using different spatial domain transmission filters, the reference signal is used for receiving and measurement by the second terminal using a same spatial domain reception filter, and the first terminal receives second reference signal resource indication information and/or a measurement result sent by the second terminal.

For the second terminal side, in a process of selecting a spatial domain transmission filter, the second terminal receives the reference signal by using a same spatial domain reception filter and measures the reference signal, the reference signal is sent by the first terminal by using different spatial domain transmission filters, and the second terminal sends the second reference signal resource indication information and/or the measurement result to the first terminal.

In some embodiments, in the process of selecting a spatial domain transmission filter, the first terminal sends the reference signal by using different spatial domain transmission filters, and the second terminal receives the reference signal by using a same spatial domain reception filter, measures the reference signal, and sends the second reference signal resource indication information and/or the measurement result to the first terminal.

In some embodiments, first indication information is used to indicate a first CSI-RS resource set; and
a repetition parameter repetition of the first CSI-RS resource set is set to a third value, for example, the third value is off (off).

It should be noted that, that the repetition parameter repetition of the first CSI-RS resource set is set to off does not necessarily indicate that all CSI-RSs sent by the first terminal are different, but only indicates that the first terminal does not send the CSI-RSs by using a same spatial domain transmission filter, that is, the first terminal does not send the reference signal by using the same spatial domain transmission filter.

In some embodiments, the first CSI-RS resource set is configured by using a sidelink bandwidth part BWP or resource pool configuration information. In some other embodiments, the first CSI-RS resource set is configured by the first terminal for the second terminal. In still some other embodiments, the first CSI-RS resource set is configured by the second terminal for the first terminal. For example, for the first terminal side, the method further includes: configuring, by the first terminal, the first CSI-RS resource set for the second terminal. For the second terminal side, the method further includes: configuring, by the second terminal, the first CSI-RS resource set for the first terminal.

For example, the first terminal determines the first CSI-RS resource set, and sends the first CSI-RS resource set to the second terminal. The second terminal may receive the first CSI-RS resource set sent by the first terminal. For another example, the second terminal determines the first CSI-RS resource set, and sends the first CSI-RS resource set to the first terminal. The first terminal may receive the first CSI-RS resource set sent by the second terminal.

Optionally, the first CSI-RS resource set may be carried in the first indication information. Optionally, identification information of the first CSI-RS resource set may be carried in the first indication information.

In an implementation process, the first indication information is used to instruct the first terminal to start a process of selecting a spatial domain transmission filter. In the process of determining a spatial domain transmission filter, the first terminal sends CSI-RSs in turn by using different spatial domain transmission filters, and the second terminal measures the CSI-RSs and reports CRI and/or a measurement result to the first terminal. Therefore, the first terminal needs to notify the second terminal of a moment at which the process of selecting a spatial domain transmission filter is started.

FIG. 16 is a schematic diagram of a position of first indication information according to an embodiment of this application. As shown in FIG. 16, a first terminal sends first indication information (which may be, for example, sidelink configuration information) to a second terminal in a slot 0. The first indication information is used to instruct the first terminal to start a process of selecting a spatial domain transmission filter. Because the first terminal selects a resource by using a mode 2, it cannot be ensured that the first terminal has a periodic transmission resource for transmission of CSI-RSs. For example, as shown in FIG. 16, the first terminal selects four slots, that is, slots 3, 5, 6, and 8, to respectively send the CSI-RSs, and the different slots use different spatial domain transmission filters. In this case, the first terminal sends the CSI-RSs in turn by using the different spatial domain transmission filters. The second terminal separately receives the CSI-RSs sent by the first terminal by using a same spatial domain reception filter, measures the CSI-RSs, selects a CSI-RS resource according to a measurement result, and feeds back the CSI-RS resource and the measurement result in a slot 12, that is, reports CRI and the measurement result to the first terminal.

Optionally, the first indication information is used to indicate a first CSI-RS resource set. A repetition (repetition) parameter in the first CSI-RS resource set is set to off. The first CSI-RS resource set is configured by using a sidelink BWP or resource pool configuration information, or the first terminal configures the first CSI-RS resource set for the second terminal, or the second terminal configures the first CSI-RS resource set for the first terminal.

In some embodiments, for the first terminal side, in a process of selecting a spatial domain reception filter, the first terminal sends a reference signal by using a same spatial domain transmission filter, the reference signal is used for receiving and measurement by the second terminal using different spatial domain reception filters, and a target spatial domain reception filter is selected according to a measurement result.

For the second terminal side, in the process of selecting a spatial domain reception filter, the second terminal receives the reference signal by using different spatial domain reception filters and measures the reference signal, the reference signal is sent by the first terminal by using a same spatial domain transmission filter, and the second terminal selects a target spatial domain reception filter according to the measurement result.

In some embodiments, in the process of selecting a spatial domain reception filter, the first terminal sends the reference signal by using a same spatial domain transmission filter, and the second terminal receives the reference signal by using different spatial domain reception filters, measures the reference signal, and selects a target spatial domain reception filter according to the measurement result.

In some embodiments, second indication information is used to indicate a second CSI-RS resource set; and
a repetition parameter repetition of the second CSI-RS resource set is set to a fourth value, for example, the fourth value is on (on).

It should be noted that, that the repetition parameter repetition of the first CSI-RS resource set is set to on indicates that CRI-RSs sent by the first terminal are identical and the CRI-RSs are sent by using a same spatial domain transmission filter.

In some embodiments, the second CSI-RS resource set is configured by using a sidelink bandwidth part BWP or resource pool configuration information. In some other embodiments, the second CSI-RS resource set is configured by the first terminal for the second terminal. In still some other embodiments, the second CSI-RS resource set is configured by the second terminal for the first terminal. For example, for the first terminal side, the method further includes: configuring, by the first terminal, the second CSI-RS resource set for the second terminal. For another example, for the second terminal side, the method further includes: configuring, by the second terminal, the second CSI-RS resource set for the first terminal.

For example, the first terminal determines the second CSI-RS resource set, and sends the second CSI-RS resource set to the second terminal. The second terminal may receive the second CSI-RS resource set sent by the first terminal. For another example, the second terminal determines the second CSI-RS resource set, and sends the second CSI-RS resource set to the first terminal. The first terminal may receive the second CSI-RS resource set sent by the second terminal.

Optionally, the second CSI-RS resource set may be carried in the second indication information. Optionally, identification information of the second CSI-RS resource set may be carried in the second indication information.

In an implementation process, the second indication information is used to instruct the first terminal to start a process of selecting a spatial domain reception filter. In the process of determining a spatial domain reception filter, the first terminal sends CSI-RSs in turn by using a same spatial domain transmission filter, and the second terminal respectively receives, by using different spatial domain reception filters, the CSI-RSs sent by the first terminal, performs measurement, and selects an optimal spatial domain reception filter according to a measurement result. Therefore, the second terminal needs to learn of a moment at which the first terminal starts the process of selecting a spatial domain reception filter, and further may respectively receive, by using the different spatial domain reception filters, the CSI-RSs sent by the first terminal.

Optionally, the second indication information is used to indicate the second CSI-RS resource set. The repetition (repetition) parameter in the second CSI-RS resource set is set to on. The second CSI-RS resource set is configured by using a sidelink BWP or resource pool configuration information, or the first terminal configures the second CSI-RS resource set for the second terminal, or the second terminal configures the second CSI-RS resource set for the first terminal.

Optionally, third indication information is used to instruct the second terminal to report CRI and/or a measurement result. In some embodiments, in a process of determining a spatial domain transmission filter, the first terminal needs to determine a target spatial domain transmission filter according to the CRI reported by the second terminal. Therefore, the first terminal may send the third indication information to the second terminal, to instruct the second terminal to report the CRI information.

In some embodiments, first sidelink information is carried in at least one of the following: SCI, a MAC CE, or PC5-radio resource control PC5-RRC.

In some embodiments, the SCI includes first stage SCI (1st stage SCI) carried over a PSCCH or second stage SCI (2nd stage SCI) carried over a PSSCH.

In some embodiments, a first priority corresponding to the first sidelink information is configured by using protocol pre-defined information, pre-configuration information, or network configuration information.

In some embodiments, the first priority corresponding to the first sidelink information is determined by the first terminal, and is indicated to the second terminal by using indication information. Alternatively, the first priority corresponding to the first sidelink information is determined by the second terminal, and is indicated to the first terminal by using indication information. The indication information is carried in, for example, PC5-RRC signalling.

In some embodiments, when the first sidelink information is transmitted together with first sidelink data, the first priority corresponding to the first sidelink information is determined according to a priority corresponding to the first sidelink data, for example, the first priority corresponding to the first sidelink information is equal to the priority corresponding to the first sidelink data.

In some embodiments, the first sidelink information has the highest sidelink priority, or the first sidelink information has the lowest sidelink priority.

In this way, in a case in which the first sidelink information has the highest sidelink priority, the first sidelink information is preferentially transmitted regardless of whether the first sidelink information conflicts with any other sidelink information. In a case in which the first sidelink information has the lowest sidelink priority, regardless of whether the first sidelink information conflicts with any other sidelink information, the any other sidelink information is preferentially transmitted. For example, in a case in which the first sidelink information has the highest sidelink priority, regardless of whether the first sidelink information conflicts with any other sidelink information, the first terminal preferentially sends the first sidelink information, and/or the second terminal preferentially receives the first sidelink information. For another example, in a case in which the first sidelink information has the lowest sidelink priority, regardless of whether the first sidelink information conflicts with any other sidelink information, the first terminal preferentially sends the any other sidelink information, and/or the second terminal preferentially receives the any other sidelink information.

In some embodiments, the first terminal or the second terminal may determine a priority sequence between the first sidelink information and other information, and therefore may determine transmission of the first sidelink information based on the priority sequence. For example, the priority sequence between the first sidelink information and other information may include: that a priority corresponding to transmission of uplink control information is higher than the first priority corresponding to the first sidelink information.

In some other embodiments, the first terminal or the second terminal may obtain a priority list, where the priority list includes a priority corresponding to at least one piece of information, the at least one piece of information includes the first sidelink information, and the first priority corresponding to the first sidelink information is determined based on the priority list. The priority list may be configured by using protocol pre-defined information, pre-configuration information, or network configuration information.

In some embodiments, the first priority corresponding to the first sidelink information may be related to a current working scenario of the first terminal or the second terminal. For example, the first terminal or the second terminal may work in a gaming scenario, a video call scenario, or a video playback scenario.

FIG. 17a is a schematic flowchart of still another communication method according to an embodiment of this application. As shown in FIG. 17a, the method includes:
S 1701: A first terminal determines a third priority corresponding to fifth sidelink information; where the fifth sidelink information includes at least one of the following: a measurement result or second reference signal resource indication information.
S1702: The first terminal receives, based on the third priority, the fifth sidelink information sent by a second terminal.

In some embodiments, the third priority corresponding to the fifth sidelink information is configured by using protocol pre-defined information, pre-configuration information, or network configuration information.

In some embodiments, the third priority corresponding to the fifth sidelink information is determined by the first terminal, and is indicated to the second terminal by using indication information. Alternatively, the third priority corresponding to the fifth sidelink information is determined by the second terminal, and is indicated to the first terminal by using indication information. The indication information is carried in, for example, PC5-RRC signalling.

In some embodiments, when the fifth sidelink information is transmitted together with second sidelink data (for example, when the second terminal sends both the fifth sidelink information and the second sidelink data to the first terminal), the third priority corresponding to the fifth sidelink information is determined according to a priority corresponding to the second sidelink data, for example, the third priority corresponding to the fifth sidelink information is equal to the priority corresponding to the second sidelink data.

Optionally, the fifth sidelink information and the second sidelink data may be transmitted on a same resource block.

In some embodiments, the fifth sidelink information has the highest sidelink priority, or the fifth sidelink information has the lowest sidelink priority.

In this way, in a case in which the fifth sidelink information has the highest sidelink priority, the first terminal preferentially receives the fifth sidelink information regardless of whether the fifth sidelink information conflicts with any other sidelink information. In a case in which the fifth sidelink information has the lowest sidelink priority, regardless of whether the fifth sidelink information conflicts with any other sidelink information, the first terminal preferentially receives the any other sidelink information.

In some embodiments, the third priority corresponding to the fifth sidelink information is determined based on a priority corresponding to a reference signal; and
the reference signal includes at least one of the following: a CSI-RS, a PSCCH DMRS, a PSSCH DMRS, or a PT-RS.

It should be understood that the reference signal is a reference signal associated with the fifth sidelink information. For example, when the fifth sidelink information includes the measurement result, the measurement result is obtained based on measurement of the reference signal. For another example, when the fifth sidelink information includes the second reference signal resource indication information, a target reference signal indicated by the second reference signal resource indication information or a target reference signal resource indicated by the second reference signal resource indication information or both are selected from the reference signal.

Optionally, the third priority corresponding to the fifth sidelink information may be a priority of the fifth sidelink information, and the priority corresponding to the reference signal may be a priority of the reference signal.

That the third priority is determined based on a priority corresponding to a reference signal may include: that a priority corresponding to the measurement result and/or a priority corresponding to the second reference signal resource indication information may be determined based on the priority corresponding to the reference signal.

In some embodiments, the first terminal may determine the priority corresponding to the reference signal, and determine the third priority corresponding to the fifth sidelink information based on the priority corresponding to the reference signal. For example, the first terminal may determine a value of the third priority corresponding to the fifth sidelink information, which is equal to a value of the priority corresponding to the reference signal.

Optionally, the priority corresponding to the reference signal may be configured by using protocol pre-defined information, pre-configuration information, or network configuration information. Optionally, the priority corresponding to the reference signal may be determined by the first terminal and indicated to the second terminal, or the priority corresponding to the reference signal may be determined by the second terminal and indicated to the first terminal.

In some embodiments, the third priority may be consistent with the priority corresponding to the reference signal. In some other embodiments, the third priority may be inconsistent with the priority corresponding to the reference signal. For example, the third priority may be higher than the priority corresponding to the reference signal, or the third priority may be lower than the priority corresponding to the reference signal.

In some embodiments, when the fifth sidelink information is transmitted together with second sidelink data (for example, when the second terminal sends both the fifth sidelink information and the second sidelink data to the first terminal), a priority of sidelink transmission (including both the fifth sidelink information and the second sidelink data) is determined by a minimum value or a maximum value in values of the third priority corresponding to the fifth sidelink information and a priority corresponding to the second sidelink data. For example, the third priority corresponding to the fifth sidelink information in the foregoing embodiments may be replaced with the priority corresponding to the sidelink transmission. The foregoing embodiments are also applicable, and details are not described in this application.

The minimum value is used as an example. When the fifth sidelink information is transmitted together with the second sidelink data, a value of the third priority corresponding to the fifth sidelink information is 2, and a value of the priority corresponding to the second sidelink data is 4, a value of the priority corresponding to the sidelink transmission is 2. That is, a value of a priority information field in SCI corresponding to the sidelink transmission is 2. For example, the first terminal may set the value of the priority information field in the SCI corresponding to the sidelink transmission to 2. Optionally, in a case in which the sidelink transmission overlaps another piece of sidelink information (for example, sixth sidelink information) in time domain and/or in a case in which the sidelink transmission overlaps uplink information in time domain, the first terminal may receive the sidelink transmission based on that the value of the priority corresponding to the sidelink transmission is 2.

In some embodiments, that the first terminal receives, based on the third priority, the fifth sidelink information sent by a second terminal includes: in a case in which a time domain resource of the fifth sidelink information overlaps that of sixth sidelink information, determining, by the first terminal, a fourth priority corresponding to the sixth sidelink information; and in a case in which a value of the third priority is less than a value of the fourth priority, receiving, by the first terminal, the fifth sidelink information sent by the second terminal.

In some embodiments, in a case in which the time domain resource of the fifth sidelink information overlaps that of the sixth sidelink information, the first terminal may determine the third priority.

Optionally, in a case in which there are a plurality of priorities corresponding to the sixth sidelink information, the fourth priority may be any one of the plurality of priorities. For example, the fourth priority may be the highest priority or the lowest priority in the plurality of priorities.

Optionally, the third priority corresponding to the fifth sidelink information may be a priority of the fifth sidelink information, and the fourth priority corresponding to the sixth sidelink information may be a priority of the sixth sidelink information.

In some embodiments, that a time domain resource of the fifth sidelink information overlaps that of sixth sidelink information may include: that the fifth sidelink information overlaps the sixth sidelink information in one or more time units. The time unit may include a subframe, a slot, a symbol, or the like.

In some embodiments, in a case in which the time domain resource of the fifth sidelink information overlaps that of the sixth sidelink information, and the value of the third priority is less than the value of the fourth priority, the first terminal determines receiving of the fifth sidelink information; or in a case in which the time domain resource of the fifth sidelink information overlaps that of the sixth sidelink information, and the value of the third priority is greater than or equal to the value of the fourth priority, the first terminal determines transmission of the sixth sidelink information.

In some embodiments, on the first terminal side, the transmission of the sixth sidelink information corresponds to receiving of the sixth sidelink information. The first terminal determines the receiving of the sixth sidelink information by using a third spatial domain reception filter, and receives the fifth sidelink information by using a fourth spatial domain reception filter, where the first spatial domain reception filter is different from the second spatial domain reception filter. In a case in which the time domain resource of the fifth sidelink information overlaps that of the sixth sidelink information, and the value of the third priority is less than the value of the fourth priority, the first terminal determines the receiving of the fifth sidelink information. In a case in which the time domain resource of the fifth sidelink information overlaps that of the sixth sidelink information, and the value of the third priority is greater than the value of the fourth priority, the first terminal determines the receiving of the sixth sidelink information.

Optionally, in a case in which it is determined that the value of the third priority is less than the value of the fourth priority, the first terminal receives the fifth sidelink information sent by the second terminal. Optionally, the first terminal does not receive the sixth sidelink information. Optionally, the first terminal delays or discards transmission of the sixth sidelink information.

Optionally, in a case in which it is determined that the value of the third priority is greater than the value of the fourth priority, the first terminal transmits the sixth sidelink information and does not receive the fifth sidelink information.

It should be noted that, in the foregoing embodiments, a case in which the fifth sidelink information overlaps the sixth sidelink information in time domain is used as an example for description. If the fifth sidelink information is transmitted together with second sidelink data, a priority of sidelink transmission (including both the fifth sidelink information and the second sidelink data) is determined by a minimum value or a maximum value in values of the third priority corresponding to the fifth sidelink information and a priority corresponding to the second sidelink data. For example, the third priority corresponding to the fifth sidelink information in the foregoing embodiments may be replaced with the priority corresponding to the sidelink transmission. The foregoing embodiments are also applicable, and details are not described in this application.

In some embodiments, that the first terminal receives, based on the third priority, the fifth sidelink information sent by a second terminal includes: in a case in which a time domain resource of the fifth sidelink information overlaps that of uplink transmission, a value of a priority index corresponding to the uplink transmission is a first value, a first priority threshold is configured, and a value of the third priority is less than the first priority threshold, receiving, by the first terminal, the fifth sidelink information sent by the second terminal.

In some embodiments, that a time domain resource of the fifth sidelink information overlaps that of uplink transmission may include: that the fifth sidelink information overlaps the uplink transmission in one or more time units. The time unit may include a subframe, a slot, a symbol, or the like.

In some embodiments, in a case in which the time domain resource of the fifth sidelink information overlaps that of the uplink transmission, the first terminal determines the third priority.

In some embodiments, while the first terminal receives the fifth sidelink information sent by the second terminal, the first terminal may further delay or discard transmission of uplink information.

In some embodiments, the method further includes: in a case in which a time domain resource of the fifth sidelink information overlaps that of uplink transmission, a value of a priority index corresponding to the uplink transmission is a first value, and a first priority threshold is not configured, transmitting, by the first terminal, uplink information. Optionally, the first terminal does not receive the fifth sidelink information.

In some embodiments, the method further includes: in a case in which a time domain resource of the fifth sidelink information overlaps that of uplink transmission, a value of a priority index corresponding to the uplink transmission is a first value, a first priority threshold is configured, and a value of the third priority is greater than or equal to the first priority threshold, transmitting, by the first terminal, uplink information. Optionally, the first terminal does not receive the fifth sidelink information.

In some embodiments, that the first terminal receives, based on the third priority, the fifth sidelink information sent by a second terminal includes: in a case in which a time domain resource of the fifth sidelink information overlaps that of uplink transmission, and a value of a priority index corresponding to the uplink transmission is a second value, obtaining, by the first terminal, a second priority threshold; and in a case in which a value of the third priority is less than the second priority threshold, receiving, by the first terminal, the fifth sidelink information sent by the second terminal.

Optionally, the first priority threshold may be sl-PriorityThreshold-UL-URLLC. Optionally, the second priority threshold may be sl-PriorityThreshold.

In some embodiments, the method further includes: in a case in which a time domain resource of the fifth sidelink information overlaps that of uplink transmission, and a value of a priority index corresponding to the uplink transmission is a second value, obtaining, by the first terminal, a second priority threshold; and in a case in which a value of the third priority is greater than or equal to the second priority threshold, transmitting, by the first terminal, uplink information. Optionally, the first terminal discards receiving of the fifth sidelink information or does not receive the fifth sidelink information.

It should be noted that, in the foregoing embodiments, a case in which the fifth sidelink information overlaps the uplink transmission in time domain is used as an example for description. If the fifth sidelink information is transmitted together with second sidelink data, a priority of sidelink transmission (including both the fifth sidelink information and the second sidelink data) is determined by a minimum value or a maximum value in values of the third priority corresponding to the fifth sidelink information and a priority corresponding to the second sidelink data. For example, the third priority corresponding to the fifth sidelink information in the foregoing embodiments may be replaced with the priority corresponding to the sidelink transmission. The foregoing embodiments are also applicable, and details are not described in this application.

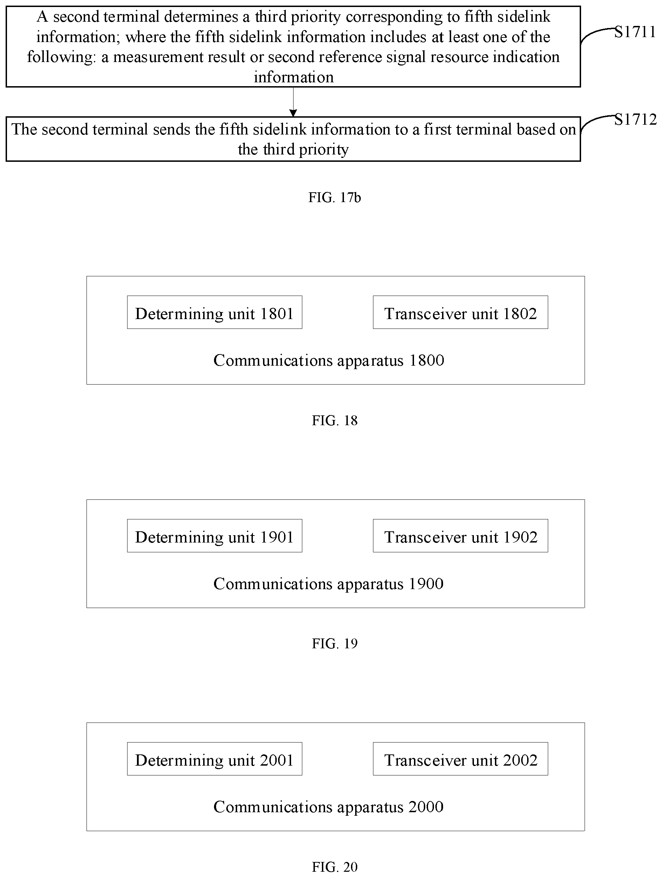

FIG. 17b is a schematic flowchart of yet another communication method according to an embodiment of this application. As shown in FIG. 17b, the method includes:
S1711: A second terminal determines a third priority corresponding to fifth sidelink information; where the fifth sidelink information includes at least one of the following: a measurement result or second reference signal resource indication information.
S1712: The second terminal sends the fifth sidelink information to a first terminal based on the third priority.

In some embodiments, the third priority corresponding to the fifth sidelink information is configured by using protocol pre-defined information, pre-configuration information, or network configuration information.

In some embodiments, the third priority corresponding to the fifth sidelink information is determined by the first terminal, and is indicated to the second terminal by using indication information. Alternatively, the third priority corresponding to the fifth sidelink information is determined by the second terminal, and is indicated to the first terminal by using indication information. The indication information is carried in, for example, PC5-RRC signalling.

In some embodiments, when the fifth sidelink information is transmitted together with second sidelink data (for example, when the second terminal sends both the fifth sidelink information and the second sidelink data to the first terminal), the third priority corresponding to the fifth sidelink information is determined according to a priority corresponding to the second sidelink data, for example, the third priority corresponding to the fifth sidelink information is equal to the priority corresponding to the second sidelink data.

In some embodiments, the fifth sidelink information has the highest sidelink priority, or the fifth sidelink information has the lowest sidelink priority.

In this way, in a case in which the fifth sidelink information has the highest sidelink priority, the second terminal preferentially sends the fifth sidelink information regardless of whether the fifth sidelink information conflicts with any other sidelink information. In a case in which the fifth sidelink information has the lowest sidelink priority, regardless of whether the fifth sidelink information conflicts with any other sidelink information, the second terminal preferentially sends the any other sidelink information.

In some embodiments, the third priority corresponding to the fifth sidelink information is determined based on a priority corresponding to a reference signal; and
the reference signal includes at least one of the following: a CSI-RS, a PSCCH DMRS, a PSSCH DMRS, or a PT-RS.

It should be understood that the reference signal is a reference signal associated with the fifth sidelink information. For example, when the fifth sidelink information includes the measurement result, the measurement result is obtained based on measurement of the reference signal. For another example, when the fifth sidelink information includes the second reference signal resource indication information, a target reference signal indicated by the second reference signal resource indication information or a target reference signal resource indicated by the second reference signal resource indication information or both are selected from the reference signal.

That the third priority is determined based on a priority corresponding to a reference signal may include: that a priority corresponding to the measurement result and/or a priority corresponding to the second reference signal resource indication information may be determined based on the priority corresponding to the reference signal.

In some embodiments, the second terminal may determine the priority corresponding to the reference signal, and determine the third priority corresponding to the fifth sidelink information based on the priority corresponding to the reference signal. For example, the second terminal may determine a value of the third priority corresponding to the fifth sidelink information, which is equal to a value of the priority corresponding to the reference signal.

Optionally, the priority corresponding to the reference signal may be configured by using protocol pre-defined information, pre-configuration information, or network configuration information, or the priority corresponding to the reference signal may be determined by the first terminal and indicated to the second terminal, or the priority corresponding to the reference signal may be determined by the second terminal and indicated to the first terminal.

In some embodiments, the third priority may be consistent with the priority corresponding to the reference signal. In some other embodiments, the third priority may be inconsistent with the priority corresponding to the reference signal. For example, the third priority may be higher than the priority corresponding to the reference signal, or the third priority may be lower than the priority corresponding to the reference signal.

In some embodiments, when the fifth sidelink information is transmitted together with second sidelink data (for example, when the second terminal sends both the fifth sidelink information and the second sidelink data to the first terminal), a priority of sidelink transmission (including both the fifth sidelink information and the second sidelink data) is determined by a minimum value or a maximum value in values of the third priority corresponding to the fifth sidelink information and a priority corresponding to the second sidelink data. For example, the third priority corresponding to the fifth sidelink information in the foregoing embodiments may be replaced with the priority corresponding to the sidelink transmission. The foregoing embodiments are also applicable, and details are not described in this application.

The minimum value is used as an example. When the fifth sidelink information is transmitted together with the second sidelink data, a value of the third priority corresponding to the fifth sidelink information is 2, and a value of the priority corresponding to the second sidelink data is 4, a value of the priority corresponding to the sidelink transmission is 2. That is, a value of a priority information field in SCI corresponding to the sidelink transmission is 2. For example, the second terminal may set the value of the priority information field in the SCI corresponding to the sidelink transmission to 2. Optionally, in a case in which the sidelink transmission overlaps another piece of sidelink information (for example, sixth sidelink information) in time domain and/or in a case in which the sidelink transmission overlaps uplink information in time domain, the second terminal may send the sidelink transmission based on that the value of the priority corresponding to the sidelink transmission is 2.

In some embodiments, that the second terminal sends the fifth sidelink information to a first terminal based on the third priority includes: in a case in which a time domain resource of the fifth sidelink information overlaps that of sixth sidelink information, determining, by the first terminal, a fourth priority corresponding to the sixth sidelink information; and in a case in which a value of the third priority is less than a value of the fourth priority, sending, by the second terminal, the fifth sidelink information to the first terminal.

In some embodiments, in a case in which the time domain resource of the fifth sidelink information overlaps that of the sixth sidelink information, the second terminal may determine the third priority.

Optionally, in a case in which the value of the third priority is less than the value of the fourth priority, the second terminal sends the fifth sidelink information to the first terminal. Optionally, the second terminal delays or discards transmission of the sixth sidelink information. Optionally, if the transmission of the sixth sidelink information corresponds to sending of the sixth sidelink information, and a power of sending both the fifth sidelink information and the sixth sidelink information exceeds a maximum transmit power, a transmit power of the sixth sidelink information is firstly reduced until the power of sending both the sixth sidelink information and the fifth sidelink information does not exceed the maximum transmit power.

Optionally, in a case in which the value of the third priority is greater than the value of the fourth priority, the second terminal transmits the sixth sidelink information. Optionally, the second terminal delays or discards transmission of the fifth sidelink information. Optionally, if transmission of the sixth sidelink information corresponds to sending of the sixth sidelink information, and a power of sending both the fifth sidelink information and the sixth sidelink information exceeds a maximum transmit power, a transmit power of the fifth sidelink information is firstly reduced until the power of sending both the sixth sidelink information and the fifth sidelink information does not exceed the maximum transmit power.

In some embodiments, that the second terminal sends the fifth sidelink information to a first terminal based on the third priority includes: in a case in which a time domain resource of the fifth sidelink information overlaps that of uplink transmission, a value of a priority index corresponding to the uplink transmission is a first value, a first priority threshold is configured, and a value of the third priority is less than the first priority threshold, sending, by the second terminal, the fifth sidelink information to the first terminal.

In some embodiments, in a case in which the time domain resource of the fifth sidelink information overlaps that of the uplink transmission, the second terminal determines the third priority.

In some embodiments, while the second terminal sends the fifth sidelink information to the first terminal, the second terminal may delay or discard transmission of uplink information. Optionally, if a power of sending both the uplink information and the first sidelink information exceeds a maximum transmit power, a transmit power of the uplink information is firstly reduced until the power of sending both the uplink information and the first sidelink information does not exceed the maximum transmit power.

In some embodiments, the method further includes: in a case in which a time domain resource of the fifth sidelink information overlaps that of uplink transmission, a value of a priority index corresponding to the uplink transmission is a first value, and a first priority threshold is not configured, transmitting, by the second terminal, uplink information. Optionally, the second terminal delays or discards transmission of the fifth sidelink information. Optionally, if a power of sending both the fifth sidelink information and the uplink information exceeds a maximum transmit power, a transmit power of the fifth sidelink information is firstly reduced until the power of sending both the uplink information and the fifth sidelink information does not exceed the maximum transmit power.

It should be noted that, in the foregoing embodiments, a case in which the fifth sidelink information overlaps the sixth sidelink information in time domain is used as an example for description. If the fifth sidelink information is transmitted together with second sidelink data, a priority of sidelink transmission (including both the fifth sidelink information and the second sidelink data) is determined by a minimum value or a maximum value in values of the third priority corresponding to the fifth sidelink information and a priority corresponding to the second sidelink data. For example, the third priority corresponding to the fifth sidelink information in the foregoing embodiments may be replaced with the priority corresponding to the sidelink transmission. The foregoing embodiments are also applicable, and details are not described in this application.

In some embodiments, the method further includes: in a case in which a time domain resource of the fifth sidelink information overlaps that of uplink transmission, a value of a priority index corresponding to the uplink transmission is a first value, a first priority threshold is configured, and a value of a first priority is greater than or equal to the first priority threshold, transmitting, by the second terminal, uplink information. Optionally, the second terminal delays or discards transmission of the fifth sidelink information. Optionally, if a power of sending both the fifth sidelink information and the uplink information exceeds a maximum transmit power, a transmit power of the fifth sidelink information is firstly reduced until the power of sending both the uplink information and the fifth sidelink information does not exceed the maximum transmit power.

In some embodiments, that the second terminal sends the fifth sidelink information to a first terminal based on the third priority includes: in a case in which a time domain resource of the fifth sidelink information overlaps that of uplink transmission, and a value of a priority index corresponding to the uplink transmission is a second value, obtaining, by the second terminal, a second priority threshold; and in a case in which a value of the third priority is less than the second priority threshold, sending, by the second terminal, the fifth sidelink information to the first terminal.

Optionally, the first priority threshold may be sl-PriorityThreshold-UL-URLLC. Optionally, the second priority threshold may be sl-PriorityThreshold.

In some embodiments, the method further includes: in a case in which a time domain resource of the fifth sidelink information overlaps that of uplink transmission, and a value of a priority index corresponding to the uplink transmission is a second value, obtaining, by the second terminal, a second priority threshold; and in a case in which a value of a first priority is greater than or equal to the second priority threshold, transmitting, by the second terminal, uplink information. Optionally, the second terminal delays or discards transmission of the fifth sidelink information. Optionally, if a power of sending both the fifth sidelink information and the uplink information exceeds a maximum transmit power, a transmit power of the fifth sidelink information is firstly reduced until the power of sending both the uplink information and the fifth sidelink information does not exceed the maximum transmit power.

It should be noted that, in the foregoing embodiments, a case in which the fifth sidelink information overlaps the uplink transmission in time domain is used as an example for description. If the fifth sidelink information is transmitted together with second sidelink data, a priority of sidelink transmission (including both the fifth sidelink information and the second sidelink data) is determined by a minimum value or a maximum value in values of the third priority corresponding to the fifth sidelink information and a priority corresponding to the second sidelink data. For example, the third priority corresponding to the fifth sidelink information in the foregoing embodiments may be replaced with the priority corresponding to the sidelink transmission. The foregoing embodiments are also applicable, and details are not described in this application.

In some embodiments, the first terminal and/ or the second terminal may determine a priority sequence between the fifth sidelink information and other information, and therefore may determine transmission of the fifth sidelink information based on the priority sequence. For example, the priority sequence between the fifth sidelink information and other information may include: that a priority corresponding to transmission of uplink control information is higher than the third priority corresponding to the fifth sidelink information.

In some other embodiments, the first terminal or the second terminal may obtain a priority list, where the priority list includes a priority corresponding to at least one piece of information, the at least one piece of information includes the fifth sidelink information, and the third priority corresponding to the fifth sidelink information is determined based on the priority list. The priority list may be configured by using protocol pre-defined information, pre-configuration information, or network configuration information.

In some embodiments, the third priority corresponding to the fifth sidelink information may be related to a current working scenario of the first terminal or the second terminal. For example, the first terminal or the second terminal may work in a gaming scenario, a video call scenario, or a video playback scenario.

In some embodiments, the measurement result is a result of measuring a reference signal; and the reference signal is sent by the first terminal to the second terminal; and
the second reference signal resource indication information is used to indicate a target reference signal resource, and the target reference signal resource is selected by the second terminal according to the measurement result.

In some embodiments, the target reference signal resource (including a foregoing first target reference signal resource) is selected by the second terminal according to the measurement result from reference signal resources received by a same spatial domain reception filter or different spatial domain reception filters.

In some embodiments, the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS.

In some embodiments, the reference signal is used for at least one of the following:
selection of a spatial domain transmission filter;
selection of a spatial domain reception filter; or
measurement of channel state information CSI, where the CSI includes at least one of the following: a channel quality indicator CQI, a rank indicator RI, or a precoding matrix indicator PMI.

In some embodiments, the measurement result includes at least one of the following: sidelink reference signal received power RSRP, sidelink reference signal received quality RSRQ, a sidelink signal strength indicator RSSI, or a sidelink signal to interference plus noise ratio SINR. The sidelink RSRP includes RSRP measured based on a CSI-RS, RSRP measured based on a PSCCH DMRS, or RSRP measured based on a PSSCH-DMRS. The sidelink RSRQ includes RSRQ measured based on a CSI-RS, RSRQ measured based on a PSCCH DMRS, or RSRQ measured based on a PSSCH-DMRS. The sidelink RSSI includes an RSSI measured based on a CSI-RS, an RSSI measured based on a PSCCH DMRS, or an RSSI measured based on a PSSCH-DMRS. The sidelink SINR includes an SINR measured based on a CSI-RS, an SINR measured based on a PSCCH DMRS, or an SINR measured based on a PSSCH-DMRS.

In some implementations, the second terminal sends first CSI-RS resource indicator (CSI-RS Resource Indicator, CRI) information and/or a measurement result to the first terminal, where the CRI information is used to indicate a CSI-RS resource selected by the second terminal according to a measurement result of a CSI-RS, and the measurement result indicates a measurement result obtained by the second terminal according to a CSI-RS.

In some embodiments, the fifth sidelink information is carried in at least one of the following: SCI, a MAC CE, or PC5-radio resource control PC5-RRC.

In some embodiments, the SCI includes first stage SCI carried over a PSCCH or second stage SCI carried over a PSSCH.

In some embodiments, at least one of the first priority, the second priority, the third priority, or the fourth priority may be determined by the first terminal and indicated to the second terminal. In this way, the second terminal may determine at least one of the first priority, the second priority, the third priority, or the fourth priority based on the indication of the first terminal. In some other embodiments, at least one of the first priority, the second priority, the third priority, or the fourth priority may be determined by the second terminal and indicated to the first terminal. In this way, the first terminal may determine at least one of the first priority, the second priority, the third priority, or the fourth priority based on the indication of the second terminal.

The foregoing describes in detail the preferred implementations of this application with reference to the accompanying drawings. However, this application is not limited to specific details in the foregoing implementations. Within a technical concept scope of this application, a plurality of simple variations of the technical solutions of this application may be performed, and these simple variations are all within the protection scope of this application. For example, each specific technical feature described in the foregoing specific implementations may be combined in any suitable manner without contradiction. To avoid unnecessary repetition, various possible combination manners are not described otherwise in this application. For another example, any combination may also be performed between different implementations of this application, provided that the combination is not contrary to the idea of this application, the combination shall also be considered as the content disclosed in this application. For another example, without conflicts, embodiments described in this application and/or the technical features in embodiments may be randomly combined with the prior art, and the technical solutions obtained after the combination also fall within the protection scope of this application.

It should be further understood that, in the method embodiments of this application, sequence numbers of the foregoing processes do not mean execution sequences. The execution sequences of the processes shall be determined according to functions and internal logic of the processes, and shall not be construed as any limitation on the implementation processes of embodiments of this application. In addition, in embodiments of this application, the terms "downlink", "uplink", and "sidelink" are used to indicate a transmission direction of a signal or data, where "downlink" indicates that a transmission direction of a signal or data is a first direction from a station to a user equipment in a cell, "uplink" indicates that a transmission direction of a signal or data is a second direction from a user equipment in a cell to a station, and "sidelink" indicates that a transmission direction of a signal or data is a third direction from a user equipment 1 to a user equipment 2. For example, "downlink signal" indicates that a transmission direction of the signal is the first direction. In addition, in embodiments of this application, the term "and/or" is merely used to describe an association relationship between associated objects, and represents that there may be three relationships. Specifically, A and/or B may represent three cases: only A exists, both A and B exist, and only B exists. In addition, the character "/" in this specification generally indicates an "or" relationship between the associated objects.

FIG. 18 is a schematic diagram of a structure of a communications apparatus according to an embodiment of this application. The communications apparatus is applicable to a first terminal. As shown in FIG. 18, the communications apparatus 1800 includes:
a determining unit 1801, configured to determine a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and
a transceiver unit 1802, configured to send the first sidelink information to a second terminal based on the first priority; where
the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

In some embodiments, the reference signal is used for at least one of the following:
selection of a spatial domain transmission filter;
selection of a spatial domain reception filter; or
measurement of channel state information CSI, where the CSI includes at least one of the following: a channel quality indicator CQI, a rank indicator RI, or a precoding matrix indicator PMI.

In some embodiments, in a case in which the reference signal is used for selection of a spatial domain reception filter, transmission of the reference signal has the highest priority.

In some embodiments, the TCI state configuration information includes at least one of the following: a TCI state identifier, a target reference signal identifier, or a quasi co-located QCL type;
the TCI state identifier is used to indicate or identify a TCI state;
the target reference signal identifier is used to indicate or identify a target reference signal, and the target reference signal includes one or more of the following: a CSI-RS, a PSCCH DMRS, a PSSCH DMRS, or a PT-RS; and
the QCL type indicates a TypeD type.

In some embodiments, the TCI state indication information is used to indicate at least one of the following:
a reference signal associated with the TCI state indication information;
a spatial domain reception filter that needs to be used by the second terminal; or
a spatial domain transmission filter used by the first terminal.

In some embodiments, the TCI state indication information includes a TCI state identifier, where the TCI state identifier is used to indicate or identify a TCI state.

In some embodiments, the TCI state indication information is applied to or applicable to transmission of second sidelink information after a first moment; and a time interval between the first moment and a second moment is greater than or equal to first duration, and the second moment is determined according to a time domain position of the TCI state indication information.

In some embodiments, the first duration is determined according to protocol pre-defined information, pre-configuration information, or network configuration information; and/or
the first duration is determined according to a processing time of the second terminal, and the processing time includes a time during which the second terminal obtains the TCI state indication information from received sidelink control information SCI or a received medium access control control element MAC CE and applies the TCI state indication information to the transmission of the second sidelink information; and/or
the first duration is one or more orthogonal frequency division multiplexing OFDM symbols.

In some embodiments, the TCI state indication information is used for determining a spatial domain transmission filter for the second terminal to send a physical sidelink feedback channel PSFCH.

In some embodiments, the determining a spatial domain transmission filter for the second terminal to send a physical sidelink feedback channel PSFCH includes: determining a spatial domain reception filter corresponding to the TCI state indication information; determining a spatial domain transmission filter based on the spatial domain reception filter; and determining the spatial domain transmission filter as the spatial domain transmission filter for sending the PSFCH.

In some embodiments, the first reference signal resource indication information is used to determine a spatial domain reception filter used by the second terminal and/or a spatial domain transmission filter used by the first terminal.

In some embodiments, the first reference signal resource indication information is sent by the first terminal to the second terminal in a case in which the first terminal is not configured to send the TCI state configuration information and/or the TCI state indication information to the second terminal.

In some embodiments, the first reference signal resource indication information is applied to or applicable to transmission of third sidelink information after a third moment; and a time interval between the third moment and a fourth moment is greater than or equal to second duration, and the fourth moment is determined according to a time domain position in which the first reference signal resource indication information is located.

In some embodiments, the second duration is determined according to protocol pre-defined information, pre-configuration information, or network configuration information; and/or
the second duration is determined according to a processing time of the second terminal, the processing time includes a time during which the second terminal obtains the first reference signal resource indication information from received sidelink control information SCI or a received medium access control control element MAC CE and applies the first reference signal resource indication information to transmission of the third sidelink information; and/or
the second duration is one or more orthogonal frequency division multiplexing OFDM symbols.

In some embodiments, the first reference signal resource indication information is used for determining a spatial domain transmission filter for the second terminal to send a PSFCH.

In some embodiments, the determining a spatial domain transmission filter for the second terminal to send a PSFCH includes: determining a spatial domain reception filter corresponding to the first reference signal resource indication information; determining a spatial domain transmission filter based on the spatial domain reception filter; and determining the spatial domain transmission filter as the spatial domain transmission filter for sending the PSFCH.

In some embodiments, in a process of selecting a spatial domain transmission filter, the first terminal sends a reference signal by using different spatial domain transmission filters, the reference signal is used for receiving and measurement by the second terminal using a same spatial domain reception filter, and the first terminal receives second reference signal resource indication information and/or a measurement result sent by the second terminal.

In some embodiments, the first indication information is used to indicate a first CSI-RS resource set; and a repetition parameter repetition of the first CSI-RS resource set is set to off.

In some embodiments, the first indication information is used to indicate a first CSI-RS resource set; and
the first CSI-RS resource set is configured by using a sidelink bandwidth part BWP or resource pool configuration information; or
the first CSI-RS resource set is configured by the second terminal for the first terminal; or
the transceiver unit 1802 is further configured to configure the first CSI-RS resource set for the second terminal.

In some embodiments, in a process of selecting a spatial domain reception filter, the first terminal sends a reference signal by using a same spatial domain transmission filter, the reference signal is used for receiving and measurement by the second terminal using different spatial domain reception filters, and a target spatial domain reception filter is selected according to the measurement result.

In some embodiments, the second indication information is used to indicate a second CSI-RS resource set; and a repetition parameter repetition of the second CSI-RS resource set is set to on.

In some embodiments, the second indication information is used to indicate a second CSI-RS resource set; and
the second CSI-RS resource set is configured by using a sidelink bandwidth part BWP or resource pool configuration information; or
the second CSI-RS resource set is configured by the second terminal for the first terminal; or
the transceiver unit 1802 is further configured to configure the second CSI-RS resource set for the second terminal.

In some embodiments, the first sidelink information is carried in at least one of the following: SCI, a MAC CE, or PC5-radio resource control PC5-RRC.

In some embodiments, the SCI includes first stage SCI carried over a PSCCH or second stage SCI carried over a PSSCH.

In some embodiments, the first priority corresponding to the first sidelink information is configured by using protocol pre-defined information, pre-configuration information, or network configuration information.

In some embodiments, the first sidelink information has the highest sidelink priority, or the first sidelink information has the lowest sidelink priority.

In some embodiments, the determining unit 1801 is further configured to: in a case in which a time domain resource of the first sidelink information overlaps that of fourth sidelink information, determine a second priority corresponding to the fourth sidelink information; and
the transceiver unit 1802 is further configured to: in a case in which a value of the first priority is less than a value of the second priority, send the first sidelink information to the second terminal.

In some embodiments, the transceiver unit 1802 is further configured to: in a case in which a time domain resource of the first sidelink information overlaps that of uplink transmission, a value of a priority index corresponding to the uplink transmission is a first value, a first priority threshold is configured, and a value of the first priority is less than the first priority threshold, send the first sidelink information to the second terminal.

In some embodiments, the transceiver unit 1802 is further configured to: in a case in which a time domain resource of the first sidelink information overlaps that of uplink transmission, and a value of a priority index corresponding to the uplink transmission is a second value, obtain a second priority threshold; and in a case in which a value of the first priority is less than the second priority threshold, send the first sidelink information to the second terminal.

FIG. 19 is a schematic diagram of a structure of another communications apparatus according to an embodiment of this application. The communications apparatus is applicable to a second terminal. As shown in FIG. 19, the communications apparatus 1900 includes:
a determining unit 1901, configured to determine a first priority corresponding to first sidelink information; where the first sidelink information includes at least one of the following: a reference signal, transmission configuration indication TCI state configuration information, TCI state indication information, first reference signal resource indication information, first indication information, second indication information, or third indication information; and
a transceiver unit 1902, configured to receive, based on the first priority, the first sidelink information sent by a first terminal; where
the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS;
the second indication information is used to instruct to start a process of selecting a spatial domain reception filter; and
the third indication information is used to instruct the second terminal to report second reference signal resource indication information and/or a measurement result.

In some embodiments, the reference signal is used for at least one of the following:
selection of a spatial domain transmission filter;
selection of a spatial domain reception filter; or
measurement of channel state information CSI, where the CSI includes at least one of the following: a channel quality indicator CQI, a rank indicator RI, or a precoding matrix indicator PMI.

In some embodiments, in a case in which the reference signal is used for selection of a spatial domain reception filter, transmission of the reference signal has the highest priority.

In some embodiments, TCI state configuration information includes at least one of the following: a TCI state identifier, a target reference signal identifier, or a quasi co-located QCL type;
the TCI state identifier is used to indicate or identify a TCI state;
the target reference signal identifier is used to indicate or identify a target reference signal, and the target reference signal includes one or more of the following: a CSI-RS, a PSCCH DMRS, a PSSCH DMRS, or a PT-RS; and
the QCL type indicates a TypeD type.

In some embodiments, the second terminal determines, based on the TCI state indication information, at least one of the following:
a reference signal associated with the TCI state indication information;
a spatial domain reception filter that needs to be used by the second terminal; or
a spatial domain transmission filter used by the first terminal.

In some embodiments, the TCI state indication information includes a TCI state identifier, where the TCI state identifier is used to indicate or identify a TCI state.

In some embodiments, the TCI state indication information is applied to or applicable to transmission of second sidelink information after a first moment; and a time interval between the first moment and a second moment is greater than or equal to first duration, and the second moment is determined according to a time domain position of the TCI state indication information.

In some embodiments, the first duration is determined according to protocol pre-defined information, pre-configuration information, or network configuration information; and/or
the first duration is determined according to a processing time of the second terminal, and the processing time includes a time during which the second terminal obtains the TCI state indication information from received sidelink control information SCI or a received medium access control control element MAC CE and applies the TCI state indication information to the transmission of the second sidelink information; and/or
the first duration is one or more orthogonal frequency division multiplexing OFDM symbols.

In some embodiments, the determining unit 1901 is further configured to determine, based on the TCI state indication information, a spatial domain transmission filter for the second terminal to send a physical sidelink feedback channel PSFCH.

In some embodiments, that the determining unit 1901 is further configured to determine a spatial domain transmission filter for the second terminal to send a physical sidelink feedback channel PSFCH includes: determining a spatial domain reception filter corresponding to the TCI state indication information; determining a spatial domain transmission filter based on the spatial domain reception filter; and determining the spatial domain transmission filter as the spatial domain transmission filter for sending the PSFCH.

In some embodiments, the determining unit 1901 is further configured to determine, based on the first reference signal resource indication information, a spatial domain reception filter used by the second terminal and/or a spatial domain transmission filter used by the first terminal.

In some embodiments, the first reference signal resource indication information is sent by the first terminal to the second terminal in a case in which the first terminal is not configured to send the TCI state configuration information and/or the TCI state indication information to the second terminal.

In some embodiments, the first reference signal resource indication information is applied to or applicable to transmission of third sidelink information after a third moment; and a time interval between the third moment and a fourth moment is greater than or equal to second duration, and the fourth moment is determined according to a time domain position in which the first reference signal resource indication information is located.

In some embodiments, the second duration is determined according to protocol pre-defined information, pre-configuration information, or network configuration information; and/or
the second duration is determined according to a processing time of the second terminal, and the processing time includes a time during which the second terminal obtains the first reference signal resource indication information from received sidelink control information SCI or a received medium access control control element MAC CE and applies the first reference signal resource indication information to the transmission of the third sidelink information; and/or
the second duration is one or more orthogonal frequency division multiplexing OFDM symbols.

In some embodiments, the determining unit 1901 is further configured to determine, based on the first reference signal resource indication information, a spatial domain transmission filter for the second terminal to send a PSFCH.

In some embodiments, the determining unit 1901 is further configured to determine a spatial domain reception filter corresponding to the first reference signal resource indication information; determine a spatial domain transmission filter based on the spatial domain reception filter; and determine the spatial domain transmission filter as the spatial domain transmission filter for sending the PSFCH.

In some embodiments, in a process of selecting a spatial domain transmission filter, the second terminal receives the reference signal by using a same spatial domain reception filter and measures the reference signal, the reference signal is sent by the first terminal by using different spatial domain transmission filters, and the second terminal sends the second reference signal resource indication information and/or the measurement result to the first terminal.

In some embodiments, the first indication information is used to indicate a first CSI-RS resource set; and a repetition parameter repetition of the first CSI-RS resource set is set to off.

In some embodiments, the first indication information is used to indicate a first CSI-RS resource set; and
the first CSI-RS resource set is configured by using a sidelink bandwidth part BWP or resource pool configuration information; or
the first CSI-RS resource set is configured by the first terminal for the second terminal; or
the transceiver unit 1902 is further configured to configure the first CSI-RS resource set for the first terminal.

In some embodiments, in the process of selecting a spatial domain reception filter, the second terminal receives the reference signal by using different spatial domain reception filters and measures the reference signal, the reference signal is sent by the first terminal by using a same spatial domain transmission filter, and the second terminal selects a target spatial domain reception filter according to the measurement result.

In some embodiments, the second indication information is used to indicate a second CSI-RS resource set; and a repetition parameter repetition of the second CSI-RS resource set is set to on.

In some embodiments, the second indication information is used to indicate a second CSI-RS resource set; and
the second CSI-RS resource set is configured by using a sidelink bandwidth part BWP or resource pool configuration information; or
the second CSI-RS resource set is configured by the first terminal for the second terminal; or
the transceiver unit 1902 is further configured to configure the second CSI-RS resource set for the first terminal.

In some embodiments, first sidelink information is carried in at least one of the following: SCI, a MAC CE, or PC5-radio resource control PC5-RRC.

In some embodiments, the SCI includes first stage SCI carried over a PSCCH or second stage SCI carried over a PSSCH.

In some embodiments, the first priority corresponding to the first sidelink information is configured by using protocol pre-defined information, pre-configuration information, or network configuration information.

In some embodiments, the first sidelink information has the highest sidelink priority, or the first sidelink information has the lowest sidelink priority.

In some embodiments, the determining unit 1901 is further configured to: in a case in which a time domain resource of the first sidelink information overlaps that of fourth sidelink information, determine a second priority corresponding to the fourth sidelink information; and
the transceiver unit 1902 is further configured to: in a case in which a value of the first priority is less than a value of the second priority, receive the first sidelink information sent by the first terminal.

In some embodiments, the transceiver unit 1902 is further configured to: in a case in which a time domain resource of the first sidelink information overlaps that of uplink transmission, a value of a priority index corresponding to the uplink transmission is a first value, a first priority threshold is configured, and a value of the first priority is less than the first priority threshold, receive the first sidelink information sent by the first terminal.

In some embodiments, the transceiver unit 1902 is further configured to: in a case in which a time domain resource of the first sidelink information overlaps that of uplink transmission, and a value of a priority index corresponding to the uplink transmission is a second value, obtain a second priority threshold; and in a case in which a value of the first priority is less than the second priority threshold, receive the first sidelink information sent by the first terminal.

FIG. 20 is a schematic diagram of a structure of still another communications apparatus according to an embodiment of this application. The communications apparatus is applicable to a first terminal. As shown in FIG. 20, the communications apparatus 2000 includes:
a determining unit 2001, configured to determine a third priority corresponding to fifth sidelink information; where the fifth sidelink information includes at least one of the following: a measurement result or second reference signal resource indication information; and
a transceiver unit 2002, configured to receive, based on the third priority, the fifth sidelink information sent by a second terminal.

In some embodiments, the measurement result is a result of measuring a reference signal; and the reference signal is sent by the first terminal to the second terminal; and
the second reference signal resource indication information is used to indicate a target reference signal resource, and the target reference signal resource is selected by the second terminal according to the measurement result.

In some embodiments, the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS.

In some embodiments, the reference signal is used for at least one of the following:
selection of a spatial domain transmission filter;
selection of a spatial domain reception filter; or
measurement of channel state information CSI, where the CSI includes at least one of the following: a channel quality indicator CQI, a rank indicator RI, or a precoding matrix indicator PMI.

In some embodiments, the measurement result includes at least one of the following: sidelink reference signal received power RSRP, sidelink reference signal received quality RSRQ, a sidelink signal strength indicator RSSI, or a sidelink signal to interference plus noise ratio SINR.

In some embodiments, the fifth sidelink information is carried in at least one of the following: SCI, a MAC CE, or PC5-radio resource control PC5-RRC.

In some embodiments, the SCI includes first stage SCI carried over a PSCCH or second stage SCI carried over a PSSCH.

In some embodiments, the third priority corresponding to the fifth sidelink information is configured by using protocol pre-defined information, pre-configuration information, or network configuration information.

In some embodiments, the fifth sidelink information has the highest sidelink priority, or the fifth sidelink information has the lowest sidelink priority.

In some embodiments, the third priority corresponding to the fifth sidelink information is determined based on a priority corresponding to a reference signal; and
the reference signal includes at least one of the following: a CSI-RS, a PSCCH DMRS, a PSSCH DMRS, or a PT-RS.

In some embodiments, the determining unit 2001 is further configured to: in a case in which a time domain resource of the fifth sidelink information overlaps that of sixth sidelink information, determine a fourth priority corresponding to the sixth sidelink information; and
the transceiver unit 2002 is further configured to: in a case in which a value of the third priority is less than a value of the fourth priority, receive the fifth sidelink information sent by the second terminal.

In some embodiments, the transceiver unit 2002 is further configured to: in a case in which a time domain resource of the fifth sidelink information overlaps that of uplink transmission, a value of a priority index corresponding to the uplink transmission is a first value, a first priority threshold is configured, and a value of the third priority is less than the first priority threshold, receive the fifth sidelink information sent by the second terminal.

In some embodiments, the transceiver unit 2002 is further configured to: in a case in which a time domain resource of the fifth sidelink information overlaps that of uplink transmission, and a value of a priority index corresponding to the uplink transmission is a second value, obtain a second priority threshold; and in a case in which a value of the third priority is less than the second priority threshold, receive the fifth sidelink information sent by the second terminal.

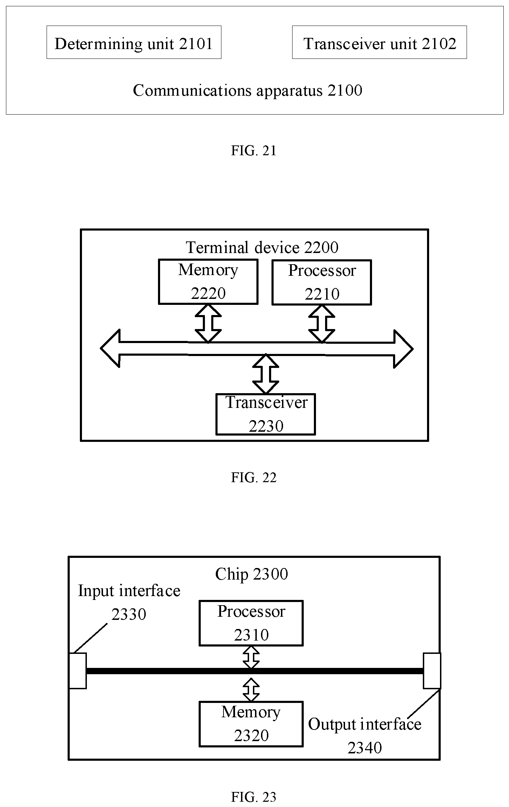

FIG. 21 is a schematic diagram of a structure of yet another communications apparatus according to an embodiment of this application. The communications apparatus is applicable to a second terminal. As shown in FIG. 20, the communications apparatus 2100 includes:
a determining unit 2101, configured to determine a third priority corresponding to fifth sidelink information; where the fifth sidelink information includes at least one of the following: a measurement result or second reference signal resource indication information; and
a transceiver unit 2102, configured to send the fifth sidelink information to a first terminal based on the third priority.

In some embodiments, the measurement result is a result of measuring a reference signal; and the reference signal is sent by the first terminal to the second terminal; and
the second reference signal resource indication information is used to indicate a target reference signal resource, and the target reference signal resource is selected by the second terminal according to the measurement result.

In some embodiments, the reference signal includes at least one of the following: a channel state information reference signal CSI-RS, a physical sidelink control channel PSCCH demodulation reference signal DMRS, a physical sidelink shared channel PSSCH DMRS, or a phase tracking reference signal PT-RS.

In some embodiments, the reference signal is used for at least one of the following:
selection of a spatial domain transmission filter;
selection of a spatial domain reception filter; or
measurement of channel state information CSI, where the CSI includes at least one of the following: a channel quality indicator CQI, a rank indicator RI, or a precoding matrix indicator PMI.

In some embodiments, the measurement result includes at least one of the following: sidelink reference signal received power RSRP, sidelink reference signal received quality RSRQ, a sidelink signal strength indicator RSSI, or a sidelink signal to interference plus noise ratio SINR.

In some embodiments, the fifth sidelink information is carried in at least one of the following: SCI, a MAC CE, or PC5-radio resource control PC5-RRC.

In some embodiments, the SCI includes first stage SCI carried over a PSCCH or second stage SCI carried over a PSSCH.

In some embodiments, the third priority corresponding to the fifth sidelink information is configured by using protocol pre-defined information, pre-configuration information, or network configuration information.

In some embodiments, the fifth sidelink information has the highest sidelink priority, or the fifth sidelink information has the lowest sidelink priority.

In some embodiments, the third priority corresponding to the fifth sidelink information is determined based on a priority corresponding to a reference signal; and
the reference signal includes at least one of the following: a CSI-RS, a PSCCH DMRS, a PSSCH DMRS, or a PT-RS.

In some embodiments, the determining unit 2101 is further configured to: in a case in which a time domain resource of the fifth sidelink information overlaps that of sixth sidelink information, determine a fourth priority corresponding to the sixth sidelink information; and
the transceiver unit 2102 is further configured to: in a case in which a value of the third priority is less than a value of the fourth priority, send the fifth sidelink information to the first terminal.

In some embodiments, the transceiver unit 2102 is further configured to: in a case in which a time domain resource of the fifth sidelink information overlaps that of uplink transmission, a value of a priority index corresponding to the uplink transmission is a first value, a first priority threshold is configured, and a value of the third priority is less than the first priority threshold, send the fifth sidelink information to the first terminal.

In some embodiments, the transceiver unit 2102 is further configured to: in a case in which a time domain resource of the fifth sidelink information overlaps that of uplink transmission, and a value of a priority index corresponding to the uplink transmission is a second value, obtain a second priority threshold; and in a case in which a value of the third priority is less than the second priority threshold, send the fifth sidelink information to the first terminal.

A person skilled in the art should understand that related descriptions of the foregoing communications apparatuses in embodiments of this application may be understood with reference to related descriptions of the communication methods in embodiments of this application.

FIG. 22 is a schematic structural diagram of a terminal device according to an embodiment of this application. The terminal device 2200 may be the foregoing first terminal or the foregoing second terminal. The terminal device 2200 shown in FIG. 22 may include a processor 2210 and a memory 2220, where the memory 2220 is configured to store a computer program, and the processor 2210 is configured to invoke and run the computer program stored in the memory 2220, to cause the terminal device to execute the communication method in any one of the foregoing embodiments.

The memory 2220 may be a separate component independent of the processor 2210, or may be integrated into the processor 2210.

In some embodiments, as shown in FIG. 22, the terminal device 2200 may further include a transceiver 2230. The processor 2210 may control the transceiver 2230 to communicate with another device. Specifically, the processor 2210 may send information or data to the another device, or receive information or data sent by the another device.

The transceiver 2230 may include a transmitting set and a receiving set. The transceiver 2230 may further include an antenna, and a quantity of antennas may be one or more.

In some embodiments, the terminal device 2200 may implement corresponding procedures implemented by a terminal device in the methods according to embodiments of this application. For brevity, details are not described herein again.

FIG. 23 is a schematic structural diagram of a chip according to an embodiment of this application. The chip 2300 shown in FIG. 23 includes a processor 2310, where the processor 2310 is configured to invoke a computer program from a memory and run the computer program, to cause a device on which the chip is installed to execute the method in embodiments of this application.

In some embodiments, as shown in FIG. 23, the chip 2300 may further include a memory 2320. The processor 2310 may invoke a computer program from the memory 2320 and run the computer program to implement a method in embodiments of this application.

The memory 2320 may be a separate component independent of the processor 2310, or may be integrated into the processor 2310.

In some embodiments, the chip 2300 may further include an input interface 2330. The processor 2310 may control the input interface 2330 to communicate with another device or chip, and specifically, may obtain information or data sent by the another device or chip.

In some embodiments, the chip 2300 may further include an output interface 2340. The processor 2310 may control the output interface 2340 to communicate with another device or chip, and specifically, may output information or data to the another device or chip.

In some embodiments, the chip may be applied to the terminal device in embodiments of this application, and the chip may implement corresponding procedures implemented by a terminal device in the methods according to embodiments of this application. For brevity, details are not described herein again.

It should be understood that the chip mentioned in this embodiment of this application may also be referred to as a system-level chip, a system chip, a chip system, or a system-on-chip.

An embodiment of this application further provides a computer storage medium, configured to store a computer program, where the computer program causes a terminal device to execute the communication method in any one of embodiments of this application.

An embodiment of this application further provides a computer program product, including computer program instructions, where the computer program instructions cause a terminal device to execute the communication method in any one of embodiments of this application.

In some embodiments, the computer program product may be applied to the terminal device in embodiments of this application, and the computer program instructions cause a computer to execute corresponding procedures implemented by a network device in the methods according to embodiments of this application. For brevity, details are not described herein again.

An embodiment of this application further provides a computer program, where the computer program causes a terminal device to execute the communication method in any one of embodiments of this application.

In some embodiments, the computer program may be applied to a terminal device in embodiments of this application. When the computer program runs on a computer, the computer executes corresponding procedures implemented by a network device in the methods according to embodiments of this application. For brevity, details are not described herein again.

A person skilled in the art should understand that related descriptions of the foregoing terminal device, computer storage medium, chip, computer program product, and computer program in embodiments of this application may be understood with reference to related descriptions of the communication method in embodiments of this application.

A processor, communications apparatus, or chip in embodiments of this application may be an integrated circuit chip having a signal processing capability. In an implementation process, the steps in the foregoing method embodiments may be performed by using an integrated logic circuit of hardware of the processor or instructions in a software form. The foregoing processor, communications apparatus, or chip may include an integration of any one or more of the following: a general-purpose processor, an application-specific integrated circuit (Application Specific Integrated Circuit, ASIC), a digital signal processor (Digital Signal Processor, DSP), a digital signal processing device (Digital Signal Processing Device, DSPD), a programmable logic device (Programmable Logic Device, PLD), a field-programmable gate array (Field Programmable Gate Array, FPGA), a central processing unit (Central Processing Unit, CPU), a graphics processing unit (Graphics Processing Unit, GPU), an embedded neural network processor (neural network processing units, NPU), a controller, a microcontroller, a microprocessor, a programmable logic device, a discrete gate or a transistor logic device, or a discrete hardware component. The processor, communications apparatus, or chip may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory or the computer storage medium in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory or the computer storage medium in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in this embodiment of this application includes but is not limited to these memories and any memory of another proper type.

A person of ordinary skill in the art may be aware that, units and algorithm steps in examples described in combination with embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

It may be aware by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of embodiments of this application essentially, or the part contributing to the conventional technology, or some of the technical solutions may be implemented in the form of a software product. The computer software product is stored in a storage medium and includes several instructions for instructing a computer device (which may be a personal computer, a server, a network device, or the like) to execute all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disk.

The foregoing describes merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A communication method, wherein the method comprises:
determining, by a first terminal, a first priority corresponding to first sidelink information; wherein the first sidelink information comprises at least one of following: a reference signal, transmission configuration indication TCI state configuration information, TCI state indication information, first reference signal resource indication information, first indication information, second indication information, or third indication information; and
sending, by the first terminal, the first sidelink information to a second terminal based on the first priority; wherein
the reference signal comprises at least one of following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

2. The method according to claim 1, wherein the reference signal is used for at least one of following:
selection of a spatial domain transmission filter;
selection of a spatial domain reception filter; or
measurement of channel state information CSI, wherein the CSI comprises at least one of following: a channel quality indicator CQI, a rank indicator RI, or a precoding matrix indicator PMI.

3. The method according to claim 1 or 2, wherein in a case in which the reference signal is used for selection of a spatial domain reception filter, transmission of the reference signal has the highest priority.

4. The method according to any one of claims 1 to 3, wherein the TCI state configuration information comprises at least one of following: a TCI state identifier, a target reference signal identifier, or a quasi co-located QCL type;
the TCI state identifier is used to indicate or identify a TCI state;
the target reference signal identifier is used to indicate or identify a target reference signal, and the target reference signal comprises one or more of following: a CSI-RS, a PSCCH DMRS, a PSSCH DMRS, or a PT-RS; and
the QCL type indicates a TypeD type.

5. The method according to any one of claims 1 to 4, wherein the TCI state indication information is used to determine at least one of following:
a reference signal associated with the TCI state indication information;
a spatial domain reception filter that needs to be used by the second terminal; or
a spatial domain transmission filter used by the first terminal.

6. The method according to any one of claims 1 to 5, wherein the TCI state indication information comprises a TCI state identifier; wherein the TCI state identifier is used to indicate or identify a TCI state.

7. The method according to any one of claims 1 to 6, wherein the TCI state indication information is applied to or applicable to transmission of second sidelink information after a first moment; and a time interval between the first moment and a second moment is greater than or equal to first duration, and the second moment is determined according to a time domain position of the TCI state indication information.

8. The method according to claim 7, wherein the first duration is determined according to protocol pre-defined information, pre-configuration information, or network configuration information; and/or
the first duration is determined according to a processing time of the second terminal; and/or
the first duration is one or more orthogonal frequency division multiplexing OFDM symbols.

9. The method according to any one of claims 1 to 8, wherein the TCI state indication information is used for determining a spatial domain transmission filter for the second terminal to send a physical sidelink feedback channel PSFCH.

10. The method according to claim 9, wherein the determining a spatial domain transmission filter for the second terminal to send a physical sidelink feedback channel PSFCH comprises: determining a spatial domain reception filter corresponding to the TCI state indication information; determining a spatial domain transmission filter based on the spatial domain reception filter; and determining the spatial domain transmission filter as the spatial domain transmission filter for sending the PSFCH.

11. The method according to any one of claims 1 to 10, wherein
the first reference signal resource indication information is used to determine a spatial domain reception filter used by the second terminal and/or a spatial domain transmission filter used by the first terminal.

12. The method according to any one of claims 1 to 11, wherein the first reference signal resource indication information is sent by the first terminal to the second terminal in a case in which the first terminal is not configured to send the TCI state configuration information and/or the TCI state indication information to the second terminal.

13. The method according to any one of claims 1 to 12, wherein the first reference signal resource indication information is applied to or applicable to transmission of third sidelink information after a third moment; and a time interval between the third moment and a fourth moment is greater than or equal to second duration, and the fourth moment is determined according to a time domain position in which the first reference signal resource indication information is located.

14. The method according to claim 13, wherein the second duration is determined according to protocol pre-defined information, pre-configuration information, or network configuration information; and/or
the second duration is determined according to a processing time of the second terminal; and/or
the second duration is one or more orthogonal frequency division multiplexing OFDM symbols.

15. The method according to any one of claims 1 to 14, wherein the first reference signal resource indication information is used for determining a spatial domain transmission filter for the second terminal to send a PSFCH.

16. The method according to claim 15, wherein the determining a spatial domain transmission filter for the second terminal to send a PSFCH comprises: determining a spatial domain reception filter corresponding to the first reference signal resource indication information; determining a spatial domain transmission filter based on the spatial domain reception filter; and determining the spatial domain transmission filter as the spatial domain transmission filter for sending the PSFCH.

17. The method according to any one of claims 1 to 16, wherein in the process of selecting a spatial domain transmission filter, the first terminal sends the reference signal by using different spatial domain transmission filters, the reference signal is used for receiving and measurement by the second terminal using a same spatial domain reception filter, and the first terminal receives the second reference signal resource indication information and/or the measurement result sent by the second terminal.

18. The method according to any one of claims 1 to 17, wherein the first indication information is used to indicate a first CSI-RS resource set; and a repetition parameter repetition of the first CSI-RS resource set is set to off.

19. The method according to any one of claims 1 to 18, wherein the first indication information is used to indicate a first CSI-RS resource set; and
the first CSI-RS resource set is configured by using a sidelink bandwidth part BWP or resource pool configuration information; or
the first CSI-RS resource set is configured by the second terminal for the first terminal; or
the method further comprises: configuring, by the first terminal, the first CSI-RS resource set for the second terminal.

20. The method according to any one of claims 1 to 19, wherein in the process of selecting a spatial domain reception filter, the first terminal sends the reference signal by using a same spatial domain transmission filter, the reference signal is used for receiving and measurement by the second terminal using different spatial domain reception filters, and a target spatial domain reception filter is selected according to the measurement result.

21. The method according to any one of claims 1 to 20, wherein the second indication information is used to indicate a second CSI-RS resource set; and a repetition parameter repetition of the second CSI-RS resource set is set to on.

22. The method according to any one of claims 1 to 21, wherein the second indication information is used to indicate a second CSI-RS resource set; and
the second CSI-RS resource set is configured by using a sidelink bandwidth part BWP or resource pool configuration information; or
the second CSI-RS resource set is configured by the second terminal for the first terminal; or
the method further comprises: configuring, by the first terminal, the second CSI-RS resource set for the second terminal.

23. The method according to any one of claims 1 to 22, wherein the first sidelink information is carried in at least one of following: SCI, a MAC CE, or PC5-radio resource control PC5-RRC.

24. The method according to claim 23, wherein the SCI comprises first stage SCI carried over a PSCCH or second stage SCI carried over a PSSCH.

25. The method according to any one of claims 1 to 24, wherein the first priority corresponding to the first sidelink information is configured by using protocol pre-defined information, pre-configuration information, or network configuration information.

26. The method according to any one of claims 1 to 25, wherein the first sidelink information has the highest sidelink priority, or the first sidelink information has the lowest sidelink priority.

27. The method according to any one of claims 1 to 26, wherein the sending, by the first terminal, the first sidelink information to a second terminal based on the first priority comprises:
in a case in which a time domain resource of the first sidelink information overlaps that of fourth sidelink information, determining, by the first terminal, a second priority corresponding to the fourth sidelink information; and
in a case in which a value of the first priority is less than a value of the second priority, sending, by the first terminal, the first sidelink information to the second terminal.

28. The method according to any one of claims 1 to 27, wherein the sending, by the first terminal, the first sidelink information to a second terminal based on the first priority comprises:
in a case in which a time domain resource of the first sidelink information overlaps that of uplink transmission, a value of a priority index corresponding to the uplink transmission is a first value, a first priority threshold is configured, and a value of the first priority is less than the first priority threshold, sending, by the first terminal, the first sidelink information to the second terminal.

29. The method according to any one of claims 1 to 27, wherein the sending, by the first terminal, the first sidelink information to a second terminal based on the first priority comprises:
in a case in which a time domain resource of the first sidelink information overlaps that of uplink transmission, and a value of a priority index corresponding to the uplink transmission is a second value, obtaining, by the first terminal, a second priority threshold; and
in a case in which a value of the first priority is less than the second priority threshold, sending, by the first terminal, the first sidelink information to the second terminal.

30. A communication method, wherein the method comprises:
determining, by a second terminal, a first priority corresponding to first sidelink information; wherein the first sidelink information comprises at least one of following: a reference signal, transmission configuration indication TCI state configuration information, TCI state indication information, first reference signal resource indication information, first indication information, second indication information, or third indication information; and
receiving, by the second terminal based on the first priority, the first sidelink information sent by the first terminal; wherein
the reference signal comprises at least one of following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

31. The method according to claim 30, wherein the reference signal is used for at least one of following:
selection of a spatial domain transmission filter;
selection of a spatial domain reception filter; or
measurement of channel state information CSI, wherein the CSI comprises at least one of following: a channel quality indicator CQI, a rank indicator RI, or a precoding matrix indicator PMI.

32. The method according to claim 30 or 31, wherein in a case in which the reference signal is used for selection of a spatial domain reception filter, transmission of the reference signal has the highest priority.

33. The method according to any one of claims 30 to 32, wherein the TCI state configuration information comprises at least one of following: a TCI state identifier, a target reference signal identifier, or a quasi co-located QCL type;
the TCI state identifier is used to indicate or identify a TCI state;
the target reference signal identifier is used to indicate or identify a target reference signal, and the target reference signal comprises one or more of following: a CSI-RS, a PSCCH DMRS, a PSSCH DMRS, or a PT-RS; and
the QCL type indicates a TypeD type.

34. The method according to any one of claims 30 to 33, wherein the second terminal determines, based on the TCI state indication information, at least one of following:
a reference signal associated with the TCI state indication information;
a spatial domain reception filter that needs to be used by the second terminal; or
a spatial domain transmission filter used by the first terminal.

35. The method according to any one of claims 30 to 34, wherein the TCI state indication information comprises a TCI state identifier; wherein the TCI state identifier is used to indicate or identify a TCI state.

36. The method according to any one of claims 30 to 35, wherein the TCI state indication information is applied to or applicable to transmission of second sidelink information after a first moment; and a time interval between the first moment and a second moment is greater than or equal to first duration, and the second moment is determined according to a time domain position of the TCI state indication information.

37. The method according to claim 36, wherein the first duration is determined according to protocol pre-defined information, pre-configuration information, or network configuration information; and/or
the first duration is determined according to a processing time of the second terminal; and/or the first duration is one or more orthogonal frequency division multiplexing OFDM symbols.

38. The method according to any one of claims 30 to 37, wherein the method further comprises:
determining, by the second terminal based on the TCI state indication information, a spatial domain transmission filter for the second terminal to send a physical sidelink feedback channel PSFCH.

39. The method according to claim 38, wherein the determining a spatial domain transmission filter for the second terminal to send a physical sidelink feedback channel PSFCH comprises: determining a spatial domain reception filter corresponding to the TCI state indication information; determining a spatial domain transmission filter based on the spatial domain reception filter; and determining the spatial domain transmission filter as the spatial domain transmission filter for sending the PSFCH.

40. The method according to any one of claims 30 to 39, wherein the method further comprises:
determining, by the second terminal based on the first reference signal resource indication information, a spatial domain reception filter used by the second terminal and/or a spatial domain transmission filter used by the first terminal.

41. The method according to any one of claims 30 to 40, wherein the first reference signal resource indication information is sent by the first terminal to the second terminal in a case in which the first terminal is not configured to send the TCI state configuration information and/or the TCI state indication information to the second terminal.

42. The method according to any one of claims 30 to 41, wherein the first reference signal resource indication information is applied to or applicable to transmission of third sidelink information after a third moment; and a time interval between the third moment and a fourth moment is greater than or equal to second duration, and the fourth moment is determined according to a time domain position in which the first reference signal resource indication information is located.

43. The method according to claim 42, wherein the second duration is determined according to protocol pre-defined information, pre-configuration information, or network configuration information; and/or
the second duration is determined according to a processing time of the second terminal; and/or
the second duration is one or more orthogonal frequency division multiplexing OFDM symbols.

44. The method according to any one of claims 30 to 43, wherein the method further comprises:
determining, by the second terminal based on the first reference signal resource indication information, a spatial domain transmission filter for the second terminal to send a PSFCH.

45. The method according to claim 44, wherein the determining a spatial domain transmission filter for the second terminal to send a PSFCH comprises: determining a spatial domain reception filter corresponding to the first reference signal resource indication information; determining a spatial domain transmission filter based on the spatial domain reception filter; and determining the spatial domain transmission filter as the spatial domain transmission filter for sending the PSFCH.

46. The method according to any one of claims 30 to 45, wherein in the process of selecting a spatial domain transmission filter, the second terminal receives the reference signal by using a same spatial domain reception filter and measures the reference signal, the reference signal is sent by the first terminal by using different spatial domain transmission filters, and the second terminal sends the second reference signal resource indication information and/or the measurement result to the first terminal.

47. The method according to any one of claims 30 to 46, wherein the first indication information is used to indicate a first CSI-RS resource set; and a repetition parameter repetition of the first CSI-RS resource set is set to off.

48. The method according to any one of claims 30 to 47, wherein the first indication information is used to indicate a first CSI-RS resource set; and
the first CSI-RS resource set is configured by using a sidelink bandwidth part BWP or resource pool configuration information; or
the first CSI-RS resource set is configured by the first terminal for the second terminal; or
the method further comprises: configuring, by the second terminal, the first CSI-RS resource set for the first terminal.

49. The method according to any one of claims 30 to 48, wherein in the process of selecting a spatial domain reception filter, the second terminal receives the reference signal by using different spatial domain reception filters and measures the reference signal, the reference signal is sent by the first terminal by using a same spatial domain transmission filter, and the second terminal selects a target spatial domain reception filter according to the measurement result.

50. The method according to any one of claims 30 to 49, wherein the second indication information is used to indicate a second CSI-RS resource set; and a repetition parameter repetition of the second CSI-RS resource set is set to on.

51. The method according to any one of claims 30 to 50, wherein the second indication information is used to indicate a second CSI-RS resource set; and
the second CSI-RS resource set is configured by using a sidelink bandwidth part BWP or resource pool configuration information; or
the second CSI-RS resource set is configured by the first terminal for the second terminal; or
the method further comprises: configuring, by the second terminal, the second CSI-RS resource set for the first terminal.

52. The method according to any one of claims 30 to 51, wherein the first sidelink information is carried in at least one of following: SCI, a MAC CE, or PC5-radio resource control PC5-RRC.

53. The method according to any one of claims 30 to 52, wherein the SCI comprises first stage SCI carried over a PSCCH or second stage SCI carried over a PSSCH.

54. The method according to any one of claims 30 to 53, wherein the first priority corresponding to the first sidelink information is configured by using protocol pre-defined information, pre-configuration information, or network configuration information.

55. The method according to any one of claims 30 to 54, wherein the first sidelink information has the highest sidelink priority, or the first sidelink information has the lowest sidelink priority.

56. The method according to any one of claims 30 to 55, wherein the receiving, by the second terminal based on the first priority, the first sidelink information sent by a first terminal comprises:
in a case in which a time domain resource of the first sidelink information overlaps that of fourth sidelink information, determining, by the second terminal, a second priority corresponding to the fourth sidelink information; and
in a case in which a value of the first priority is less than a value of the second priority, receiving, by the second terminal, the first sidelink information sent by the first terminal.

57. The method according to any one of claims 30 to 56, wherein the receiving, by the second terminal based on the first priority, the first sidelink information sent by a first terminal comprises:
in a case in which a time domain resource of the first sidelink information overlaps that of uplink transmission, a value of a priority index corresponding to the uplink transmission is a first value, a first priority threshold is configured, and a value of the first priority is less than the first priority threshold, receiving, by the second terminal, the first sidelink information sent by the first terminal.

58. The method according to any one of claims 30 to 56, wherein the receiving, by the second terminal based on the first priority, the first sidelink information sent by the first terminal comprises:
in a case in which a time domain resource of the first sidelink information overlaps that of uplink transmission, and a value of a priority index corresponding to the uplink transmission is a second value, obtaining, by the first terminal, a second priority threshold; and
in a case in which a value of the first priority is less than the second priority threshold, receiving, by the second terminal, the first sidelink information sent by the first terminal.

59. A communication method, wherein the method comprises:
determining, by a first terminal, a third priority corresponding to fifth sidelink information; wherein the fifth sidelink information comprises at least one of following: a measurement result or second reference signal resource indication information; and
receiving, by the first terminal based on the third priority, the fifth sidelink information sent by a second terminal.

60. The method according to claim 59, wherein the measurement result is a result of measuring a reference signal; and the reference signal is sent by the first terminal to the second terminal; and
the second reference signal resource indication information is used to indicate a target reference signal resource, and the target reference signal resource is selected by the second terminal according to the measurement result.

61. The method according to claim 60, the reference signal comprises at least one of following: a channel state information reference signal CSI-RS, a physical sidelink control channel PSCCH demodulation reference signal DMRS, a physical sidelink shared channel PSSCH DMRS, or a phase tracking reference signal PT-RS; and/or
the reference signal is used for at least one of following:
selection of a spatial domain transmission filter;
selection of a spatial domain reception filter; or
measurement of channel state information CSI, wherein the CSI comprises at least one of following: a channel quality indicator CQI, a rank indicator RI, or a precoding matrix indicator PMI.

62. The method according to any one of claims 59 to 61, wherein the measurement result comprises at least one of following: sidelink reference signal received power RSRP, sidelink reference signal received quality RSRQ, a sidelink signal strength indicator RSSI, or a sidelink signal to interference plus noise ratio SINR.

63. The method according to any one of claims 59 to 62, wherein the fifth sidelink information is carried in at least one of following: SCI, a MAC CE, or PC5-radio resource control PC5-RRC.

64. The method according to claim 63, wherein the SCI comprises first stage SCI carried over a PSCCH or second stage SCI carried over a PSSCH.

65. The method according to any one of claims 59 to 64, wherein the third priority corresponding to the fifth sidelink information is configured by using protocol pre-defined information, pre-configuration information, or network configuration information.

66. The method according to any one of claims 59 to 65, wherein the fifth sidelink information has the highest sidelink priority, or the fifth sidelink information has the lowest sidelink priority.

67. The method according to any one of claims 59 to 66, wherein the third priority corresponding to the fifth sidelink information is determined based on a priority corresponding to a reference signal; and
the reference signal comprises at least one of following: a CSI-RS, a PSCCH DMRS, a PSSCH DMRS, or a PT-RS.

68. The method according to any one of claims 59 to 67, wherein the receiving, by the first terminal based on the third priority, the fifth sidelink information sent by a second terminal comprises:
in a case in which a time domain resource of the fifth sidelink information overlaps that of sixth sidelink information, determining, by the first terminal, a fourth priority corresponding to the sixth sidelink information; and
in a case in which a value of the third priority is less than a value of the fourth priority, receiving, by the first terminal, the fifth sidelink information sent by the second terminal.

69. The method according to any one of claims 59 to 68, wherein the receiving, by the first terminal based on the third priority, the fifth sidelink information sent by a second terminal comprises:
in a case in which a time domain resource of the fifth sidelink information overlaps that of uplink transmission, a value of a priority index corresponding to the uplink transmission is a first value, a first priority threshold is configured, and a value of the third priority is less than the first priority threshold, receiving, by the first terminal, the fifth sidelink information sent by the second terminal.

70. The method according to any one of claims 59 to 68, wherein the receiving, by the first terminal based on the third priority, the fifth sidelink information sent by a second terminal comprises:
in a case in which a time domain resource of the fifth sidelink information overlaps that of uplink transmission, and a value of a priority index corresponding to the uplink transmission is a second value, obtaining, by the first terminal, a second priority threshold; and
in a case in which a value of the third priority is less than the second priority threshold, receiving, by the first terminal, the fifth sidelink information sent by the second terminal.

71. A communication method, wherein the method comprises:
determining, by a second terminal, a third priority corresponding to fifth sidelink information; wherein the fifth sidelink information comprises at least one of following: a measurement result or second reference signal resource indication information; and
sending, by the second terminal, the fifth sidelink information to a first terminal based on the third priority.

72. The method according to claim 71, wherein the measurement result is a result of measuring a reference signal; and the reference signal is sent by the first terminal to the second terminal; and
the second reference signal resource indication information is used to indicate a target reference signal resource, and the target reference signal resource is selected by the second terminal according to the measurement result.

73. The method according to claim 72, the reference signal comprises at least one of following: a channel state information reference signal CSI-RS, a physical sidelink control channel PSCCH demodulation reference signal DMRS, a physical sidelink shared channel PSSCH DMRS, or a phase tracking reference signal PT-RS; and/or
the reference signal is used for at least one of following:
selection of a spatial domain transmission filter;
selection of a spatial domain reception filter; or
measurement of channel state information CSI, wherein the CSI comprises at least one of following: a channel quality indicator CQI, a rank indicator RI, or a precoding matrix indicator PMI.

74. The method according to any one of claims 71 to 73, wherein the measurement result comprises at least one of following: sidelink reference signal received power RSRP, sidelink reference signal received quality RSRQ, a sidelink signal strength indicator RSSI, or a sidelink signal to interference plus noise ratio SINR.

75. The method according to any one of claims 71 to 74, wherein the fifth sidelink information is carried in at least one of following: SCI, a MAC CE, or PC5-radio resource control PC5-RRC.

76. The method according to claim 75, wherein the SCI comprises first stage SCI carried over a PSCCH or second stage SCI carried over a PSSCH.

77. The method according to any one of claims 71 to 76, wherein the third priority corresponding to the fifth sidelink information is configured by using protocol pre-defined information, pre-configuration information, or network configuration information.

78. The method according to any one of claims 71 to 77, wherein the fifth sidelink information has the highest sidelink priority, or the fifth sidelink information has the lowest sidelink priority.

79. The method according to any one of claims 71 to 78, wherein the third priority corresponding to the fifth sidelink information is determined based on a priority corresponding to a reference signal; and
the reference signal comprises at least one of following: a CSI-RS, a PSCCH DMRS, a PSSCH DMRS, or a PT-RS.

80. The method according to any one of claims 71 to 79, wherein the sending, by the second terminal, the fifth sidelink information to a first terminal based on the third priority comprises:
in a case in which a time domain resource of the fifth sidelink information overlaps that of sixth sidelink information, determining, by the first terminal, a fourth priority corresponding to the sixth sidelink information; and
in a case in which a value of the third priority is less than a value of the fourth priority, sending, by the second terminal, the fifth sidelink information to the first terminal.

81. The method according to any one of claims 71 to 80, wherein the sending, by the second terminal, the fifth sidelink information to a first terminal based on the third priority comprises:
in a case in which a time domain resource of the fifth sidelink information overlaps that of uplink transmission, a value of a priority index corresponding to the uplink transmission is a first value, a first priority threshold is configured, and a value of the third priority is less than the first priority threshold, sending, by the second terminal, the fifth sidelink information to the first terminal.

82. The method according to any one of claims 71 to 80, wherein the sending, by the second terminal, the fifth sidelink information to a first terminal based on the third priority comprises:
in a case in which a time domain resource of the fifth sidelink information overlaps that of uplink transmission, and a value of a priority index corresponding to the uplink transmission is a second value, obtaining, by the first terminal, a second priority threshold; and
in a case in which a value of the third priority is less than the second priority threshold, sending, by the second terminal, the fifth sidelink information to the first terminal.

83. A communications apparatus, wherein the communications apparatus comprises:
a determining unit, configured to determine a first priority corresponding to first sidelink information; wherein the first sidelink information comprises at least one of following: a reference signal, transmission configuration indication TCI state configuration information, TCI state indication information, first reference signal resource indication information, first indication information, second indication information, or third indication information; and
a transceiver unit, configured to send the first sidelink information to a second terminal based on the first priority; wherein
the reference signal comprises at least one of following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

84. A communications apparatus, wherein the communications apparatus comprises:
a determining unit, configured to determine a first priority corresponding to first sidelink information; wherein the first sidelink information comprises at least one of following: a reference signal, transmission configuration indication TCI state configuration information, TCI state indication information, first reference signal resource indication information, first indication information, second indication information, or third indication information; and
a transceiver unit, configured to receive, based on the first priority, the first sidelink information sent by a first terminal; wherein
the reference signal comprises at least one of following: a channel state information reference signal CSI-RS, a physical sidelink control channel PSCCH demodulation reference signal DMRS, a physical sidelink shared channel PSSCH DMRS, or a phase tracking reference signal PT-RS;
the first indication information is used to instruct to start a process of selecting a spatial domain transmission filter;
the second indication information is used to instruct to start a process of selecting a spatial domain reception filter; and
the third indication information is used to instruct the second terminal to report second reference signal resource indication information and/or a measurement result.

85. A communications apparatus, wherein the communications apparatus comprises:
a determining unit, configured to determine a third priority corresponding to fifth sidelink information; wherein the fifth sidelink information comprises at least one of following: a measurement result or second reference signal resource indication information; and
a transceiver unit, configured to receive, based on the third priority, the fifth sidelink information sent by a second terminal.

86. A communications apparatus, wherein the communications apparatus comprises:
a determining unit, configured to determine a third priority corresponding to fifth sidelink information; wherein the fifth sidelink information comprises at least one of following: a measurement result or second reference signal resource indication information; and
a transceiver unit, configured to send the fifth sidelink information to a first terminal based on the third priority.

87. A terminal device, comprising a processor and a memory, wherein the memory is configured to store a computer program, and the processor is configured to invoke and run the computer program stored in the memory, so that the terminal device executes the method according to any one of claims 1 to 29, or the method according to any one of claims 30 to 58, or the method according to any one of claims 59 to 70, or the method according to any one of claims 71 to 82.

88. A chip, comprising a processor, configured to invoke a computer program from a memory and run the computer program, so that a device on which the chip is installed executes the method according to any one of claims 1 to 29, or the method according to any one of claims 30 to 58, or the method according to any one of claims 59 to 70, or the method according to any one of claims 71 to 82.

89. A computer storage medium, configured to store a computer program, wherein the computer program causes a terminal device to execute the method according to any one of claims 1 to 29, or the method according to any one of claims 30 to 58, or the method according to any one of claims 59 to 70, or the method according to any one of claims 71 to 82.

90. A computer program product, comprising computer program instructions, wherein the computer program instructions cause a terminal device to execute the method according to any one of claims 1 to 29, or the method according to any one of claims 30 to 58, or the method according to any one of claims 59 to 70, or the method according to any one of claims 71 to 82.

91. A computer program, wherein the computer program causes a terminal device to execute the method according to any one of claims 1 to 29, or the method according to any one of claims 30 to 58, or the method according to any one of claims 59 to 70, or the method according to any one of claims 71 to 82.
